(19) Europäisches Patentamt
European Patent Office
Office européen des brevets

(11) **EP 2 771 262 B1**

(12) **EUROPÄISCHE PATENTSCHRIFT**

(45) Veröffentlichungstag und Bekanntmachung des Hinweises auf die Patenterteilung:
**07.12.2016 Patentblatt 2016/49**

(51) Int Cl.:
**B65G 23/06** (2006.01)      **F16G 13/06** (2006.01)
**F16H 7/06** (2006.01)      **F16H 55/30** (2006.01)

(21) Anmeldenummer: **12787397.4**

(22) Anmeldetag: **26.10.2012**

(86) Internationale Anmeldenummer:
**PCT/EP2012/071225**

(87) Internationale Veröffentlichungsnummer:
**WO 2013/060823 (02.05.2013 Gazette 2013/18)**

(54) **ANTRIEBSKETTENRAD, GELENKKETTE, UND GELENKKETTENANTRIEB**

DRIVE SPROCKET, SPROCKET CHAIN, AND SPROCKET-CHAIN DRIVE

ROUE DENTÉE D'ENTRAÎNEMENT, CHAÎNE ARTICULÉE ET ENTRAÎNEMENT DE CHAÎNE ARTICULÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.10.2011 DE 102011054911**
**24.05.2012 DE 102012010147**
**06.09.2012 DE 102012108287**

(43) Veröffentlichungstag der Anmeldung:
**03.09.2014 Patentblatt 2014/36**

(73) Patentinhaber: **Grobbel, Burkhard**
**57392 Schmallenberg (DE)**

(72) Erfinder: **Grobbel, Burkhard**
**57392 Schmallenberg (DE)**

(74) Vertreter: **Beckmann, Jürgen**
**Dr. Jürgen Beckmann**
**Patentanwalt**
**An der Baumschule 23**
**57462 Olpe (DE)**

(56) Entgegenhaltungen:
EP-A1- 0 611 000      WO-A1-2010/108816
DE-A1- 19 945 921

**Beschreibung**

Die Erfindung betrifft einen Gelenkkettenantrieb nach dem Oberbegriff des Anspruchs 1.

Ein derartiges Antriebskettenrad ist beispielsweise aus der WO 2010/108816 A1 bekannt. Die Zwischenkörper sind dort verschiebebeweglich zwischen zwei identisch ausgebildeten Seitenwänden angeordnet, welche durch fest verschweißte Bolzen, die durch ein Auge der Zwischenkörper ragen, verbunden sind.

Des Weiteren ist aus der DE 20 2009 017 290 U1 eine Verzahnung zwischen zwei Zahnrädern bekannt, bei welcher die Zähne durch auf Kugellagern gelagerte Rollen gebildet werden.

Die EP 611 000 A1 zeigt einem Gelenkkettenantrieb nach dem Oberbegriff des Anspruchs 1, sowie ein Kettenrad mit zwei Wänden, welche an Flanschen einer Nabe festgeschraubt sind. Ferner sind Vorsprünge auf Führungsstiften beweglich gelagert, wobei die Führungsstifte mit den Wänden verbunden sind.

Vor diesem Hintergrund war es Aufgabe der vorliegenden Erfindung, Antriebskettenräder und Gelenkkettenantriebe bereitzustellen, welche einfach und prozesssicher herzustellen sind und einen robusten Betrieb erlauben.

Diese Aufgabe wird durch einen Gelenkkettenantrieb mit einem Antriebskettenrad nach Anspruch 1 gelöst. Vorteilhafte Ausgestaltungen sind in den Unteransprüchen enthalten.

Antriebskettenräder

So betrifft die Erfindung gemäß einem ersten eigenständigen Aspekt ein Antriebskettenrad für eine Gelenkkette, welches die folgenden Komponenten enthält:

a) Eine erste Seitenwand, die drehbar um eine (Dreh-) Achse lagerbar ist. Die Seitenwand kann beispielsweise eine Nabe aufweisen, durch die eine Welle geführt werden kann.

b) Eine zweite Seitenwand, welche unter Ausbildung eines Zwischenraumes axial beabstandet von der ersten Seitenwand angeordnet ist und mit dieser (starr) gekoppelt ist. Angaben wie "axial" oder "radial" sollen sich in diesem Zusammenhang auf die vorstehend beschriebene Achse beziehen, um welche die erste - und damit auch zweite - Seitenwand drehbar gelagert werden kann.

c) Einen Zwischenkörper, welcher beweglich im vorstehend genannten Zwischenraum zwischen den beiden Seitenwänden angeordnet ist. Die Bezeichnung "Zwischenkörper" deutet in diesem Zusammenhang daraufhin, dass der Zwischenkörper bei der Verwendung des Antriebskettenrades im Kraftübertraguhgsweg zwischen den Seitenwänden und der anzutreibenden Gelenkkette liegt. In der Regel wird der Zwischenkörper dasjenige Element sein, welches unmittelbar mit der Gelenkkette (genauer gesagt deren Gelenkachsen) in Kontakt kommt.

d) Eine Laufbuchse, welche zwischen der ersten Seitenwand und der zweiten Seitenwand eingeklemmt ist und an welcher der Zwischenkörper beweglich gelagert ist. Das "Einklemmen" der Laufbuchse zwischen den beiden Seitenwänden bedeutet in diesem Zusammenhang, dass die Laufbuchse mit den Seitenwänden nicht stöffschlüssig verbunden ist, sondern kraftschlüssig (und gegebenenfalls zusätzlich formschlüssig).

Erfindungsgemäß ist der Zwischenkörper drehbeweglich auf der Laufbuchse gelagert. Ferner weisen die erste Seitenwand und die zweite Seitenwand des Antriebskettenrades einen Zahn auf, welcher beim Betrieb des Gelenkkettenantriebes in die Gelenkkette eingreift, wobei der Zwischenkörper an diesem Zahn gelagert ist.

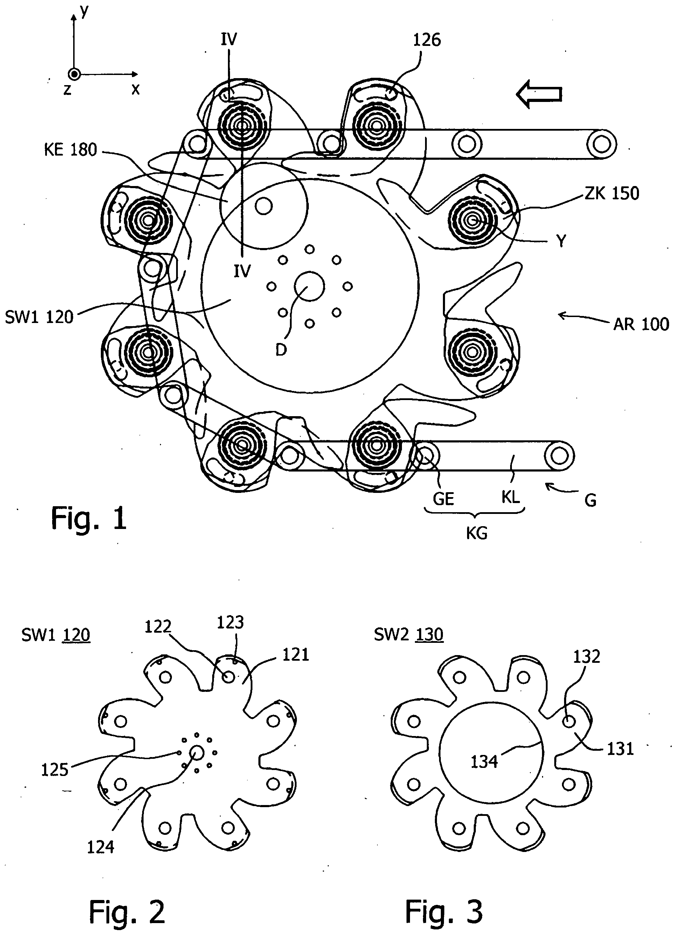

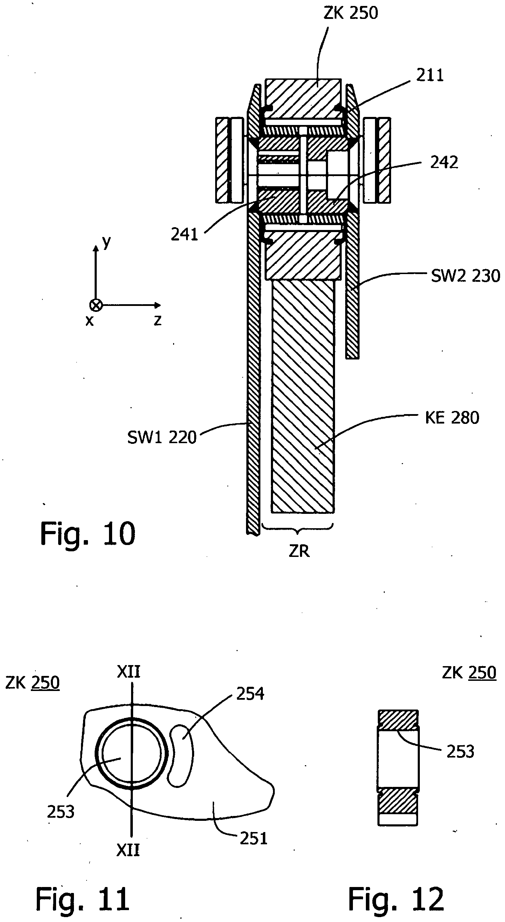

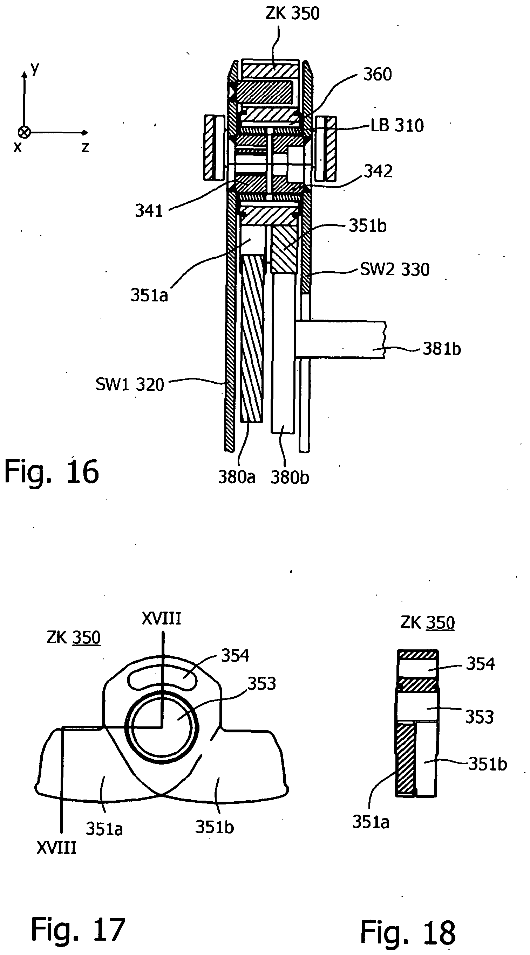

Ein derartiges Antriebskettenrad ist beispielsweise in den Figuren 1-23 dargestellt.

Zur Definition der verwendeten Begrifflichkeiten kann ergänzend Bezug auf die WO 2010/108816 A1 genommen werden, welche vollumfänglich in die vorliegende Anmeldung aufgenommen wird.

Durch das Einklemmen einer Laufbuchse zwischen den beiden Seitenwänden des Antriebskettenrades wird eine einfache Montage sowie Demontage des Antriebskettenrades mit seinen beweglichen Zwischenkörpern erreicht. Sollte es daher zu einem Verschleiß der Zwischenkörper und/oder der Laufbuchse kommen, so können diese leicht ausgetauscht werden.

Gemäß einem zweiten Aspekt umfasst die Erfindung ein Antriebskettenrad für eine Gelenkkette, welches in der oben beschriebenen Weise (d. h. mit einer Laufbuchse) ausgebildet ist. Das Antriebskettenrad enthält die folgenden Komponenten:

a) Eine erste Seitenwand, die drehbar um eine Achse lagerbar ist.

b) Eine zweite Seitenwand, die unter Ausbildung eines Zwischenraumes axial beabstandet von der ersten Seitenwand angeordnet und mit dieser gekoppelt ist.

c) Einen Zwischenkörper, welcher im vorstehend genannten Zwischenraum beweglich (mittelbar oder unmittelbar) an der ersten und/oder der zweiten Seitenwand angeordnet ist.

d) Ein Kulissenelement, welches an einer ortsfesten Halterung so anbringbar oder bereits angebracht ist, dass es in den oben genannten Zwischenraum zwischen den beiden Seitenwänden ragt und mit dem Zwischenkörper in Kontakt kommen kann. Aufgrund seiner "ortsfesten" Anbringung macht das Kulissenelement eine Drehung der Seitenwand um ihre Drehachse nicht mit.

Ein derartiges Antriebskettenrad ist in den Figuren 1-18 dargestellt.

Das Kulissenelement kann optional selbst ortsfest, d. h. unbeweglich sein. Vorzugsweise ist das Kulissenelement jedoch beweglich an der ortsfesten Halterung lagerbar oder gelagert. Insbesondere kann das Kulissenelement drehbeweglich lagerbar oder gelagert sein.

Durch seine ortsfeste Anbringung kann das Kulissenelement gezielt in bestimmten Phasen der Drehung des Antriebskettenrades mit dessen Zwischenkörper in Kontakt kommen. Da der Zwischenkörper beweglich gegenüber den Seitenwänden des Antriebskettenrades ist, kann seine Position bzw. Ausrichtung durch den Kontakt mit dem Kulissenelement in geeigneter Weise beeinflusst werden. Dies kann dazu ausgenutzt werden, den Zwischenkörper vor, während und/oder nach seinem Eingriff in eine Gelenkkette so zu beeinflussen, dass sich eine optimale und möglichst verschleißfreie Kraftübertragung auf die Gelenkkette ergibt.

Nach einem dritten Aspekt umfasst die Erfindung ein Antriebskettenrad für eine Gelenkkette mit den folgenden Komponenten:

a) Einem Radkörper, der drehbeweglich um eine Rotationsachse lagerbar (bzw. gelagert) ist.

b) Mindestens zwei Zwischenkörpern, welche beweglich am Radkörper derart gelagert sind, dass sie während einer Umdrehung des Radkörpers beide Kraft auf dasselbe Kettengelenk ausüben können.

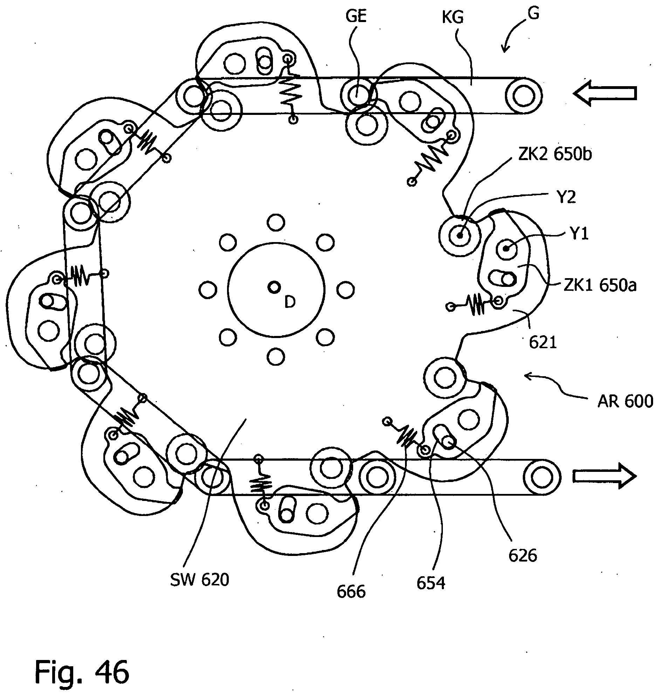

Ein derartiges Antriebskettenrad ist in Figur 46 dargestellt.

Das Antriebskettenrad kann im Übrigen gemäß einer der sonstigen Ausführungsformen von Antriebskettenrädern nach der vorliegenden Erfindung ausgestaltet sein, beispielsweise indem der Radkörper aus zwei beabstandeten Seitenwänden besteht, zwischen denen einer oder beide Zwischenkörper gelagert sind.

Die Einwirkung der Zwischenkörper auf ein Kettenglied findet in der Regel nur in bestimmten Phasen während der vollständigen Umdrehung des Radkörpers statt, wobei diese Phasen für die beiden Zwischenkörper im Allgemeinen verschieden sind.

Die Einwirkung der Zwischenkörper auf ein Kettenglied kann im Prinzip an beliebigen Teilen dieses Kettengliedes erfolgen, beispielsweise an den Laschen. Besonders bevorzugt ist es indes, wenn die Einwirkung auf ein Gelenk der Kette und/oder einen zusätzlich angebrachten Zwischenbolzen erfolgt. Vorteilhafterweise wirken dann beide Zwischenkörper auf dasselbe Gelenk bzw. denselben Zwischenbolzen ein.

Ein Vorteil des beschriebenen Antriebskettenrades liegt darin, dass über die Bereitstellung von zwei beweglichen Zwischenkörpern sich besonders vorteilhafte Bewegungen einer Gelenkkette realisieren lassen, wobei alle hierzu notwendigen Bestandteile (d. h. die mindestens zwei Zwischenkörper) am Antriebskettenrad selbst vorhanden sind. Es ist also nicht unbedingt erforderlich, Zusatzkomponenten in der Umgebung des Antriebskettenrades zu installieren.

Nachfolgend werden verschiedene Weiterbildungen der oben erläuterten Antriebskettenräder beschrieben.

Im Prinzip ergeben sich die vorteilhaften Eigenschaften der Erfindung bereits bei einem Antriebskettenrad mit einem einzigen Zwischenkörper, In der Regel sind jedoch mehrere derartige Zwischenkörper vorgesehen und typischerweise rotationssymmetrisch über den Umfang des Antriebskettenrades verteilt angeordnet.

Die Laufbuchse könnte im einfachsten Falle rein kraftschlüssig zwischen den (z. B. planen) Innenflächen von erster und zweiter Seitenwand eingeklemmt werden. Ein sichererer Sitz sowie eine einfachere Montage ergeben sich jedoch, wenn an der ersten Seitenwand und/oder der zweiten Seitenwand ein Trägerzapfen befestigt ist, welcher in die Laufbuchse hineinragt. In diesem Falle wird die richtige Positionierung der Laufbuchse erleichtert sowie eine zusätzliche Halterung durch Formschluss erzielt. Vorteilhafterweise ist sowohl an der ersten als auch der zweiten Seitenwand jeweils ein Trägerzapfen ausgebildet, so dass die Laufbuchse an beiden Seitenwänden formschlüssig aufgenommen wird. Die Trägerzapfen sind dabei im zusammengebauten Zustand des Antriebskettenrades vorzugsweise axial voneinander beabstandet, so dass ein Spiel für das kraftschlüssige Einklemmen der sie umgebenden Laufbuchse verbleibt.

Zusätzlich oder alternativ zur vorstehend beschriebenen Ausführungsform können die erste Seitenwand und die zweite Seitenwand vorteilhafterweise durch eine Schraube verbunden werden, welche die Laufbuchse durchgreift. Da typischerweise mehrere Zwischenkörper und entsprechend mehrere Laufbuchsen vorhanden sind, kann die Verbindung zwischen der ersten und der zweiten Seitenwand im Allgemeinen ausreichend stabil ausschließlich über derartige die Laufbuchsen durchgreifende Schrauben erfolgen. Durch die Verschraubung der Seitenwände im Bereich der Laufbuchsen wird weiterhin für ein optimales Einklemmen der Laufbuchsen gesorgt. Ferner stellen die Schrauben einen zusätzlichen formschlüssigen Träger für die Laufbuchsen dar.

Bei einer Weiterbildung der vorstehend erläuterten Ausführungsform kann an der ersten oder zweiten Seitenwand ein Trägerzapfen der oben beschriebenen Art vorgesehen sein, welcher in die Laufbuchse hineinragt und welcher weiterhin ein Innengewinde aufweist, in das die Schraube eingreift oder eingreifen kann. Mit anderen Worten kann die Schraube unmittelbar in diesen Trägerzapfen hineingeschraubt und so mit der entsprechenden Seitenwand verbunden werden.

Zusätzlich oder alternativ zur vorstehend beschriebenen Ausführungsform kann ein Trägerzapfen an der ersten oder der zweiten Seitenwand vorgesehen sein, welcher eine Vertiefung zur Aufnahme des Kopfes der Schraube aufweist. Dies ermöglicht einen sehr kompakten Aufbau, bei dem keine Teile in den Raum seitlich des Antriebskettenrades hineinragen.

Im Allgemeinen kann die Laufbuchse jede beliebige dreidimensionale Form haben, die für die Lagerung des Zwischenkörpers geeignet ist. Insbesonder kann die Laufbuchse zur Außenseite hin zylindrisch sein, so dass ein Zwischenkörper drehbeweglich auf ihr gelagert werden kann. Die zylindrische Laufbuchse kann dabei gemäß einer optionalen Weiterbildung eine exzentrische Durchgangsöffnung ("Bohrung") aufweisen. Mit einer solchen exzentrischen Bohrung kann die Laufbuchse unter verschiedenen Drehwinkeln auf Trägerzapfen der oben beschriebenen Art gelagert werden, wobei die Außenfläche der Laufbuchse je nach Drehwinkel radial weiter außen oder innen (in Bezug auf die Drehachse des Antriebskettenrades) zu liegen kommt. Auf diese Weise ergibt sich eine einfache Justiermöglichkeit für das Antriebskettenrad, mit welcher es beispielsweise in Bezug auf einen Kettenverschleiß nachreguliert werden kann.

Die Laufbuchse und/oder der Trägerzapfen (falls vorhanden) kann optional eine Öffnung aufweisen zur Durchleitung eines Schmiermittels. Auf diese Weise kann die Lagerung des Zwischenkörpers auf der Laufbuchse in einfacher Weise gewartet und ständig mit ausreichend Schmiermittel versorgt werden.

Zwischen der Laufbuchse und dem Zwischenkörper kann optional ein Gleitlager ausgebildet sein, d. h. Laufbuchse und Zwischenkörper können so angeordnet und ausgebildet sein, dass sie unmittelbar in Kontakt kommen und aufeinander gleiten. Vorzugsweise ist dabei ein (weicheres) Gleitlager-Material in den Zwischenkörper eingepresst, welcher im Übrigen beispielsweise aus gehärtetem Stahl bestehen kann.

Gemäß einer anderen Ausführungsform ist zwischen der Laufbuchse und dem Zwischenkörper ein Wälzlager angeordnet, beispielsweise ein Kugellager, ein Kegellager oder insbesondere ein Nadellager. Durch ein Wälzlager wird eine leichte Beweglichkeit des Zwischenkörpers garantiert, was die Realisierung von kompakten Bauformen (mit kurzen Hebelarmen) ermöglicht.

Prinzipiell kann der Zwischenkörper verschiebebeweglich und/oder drehbeweglich relativ zu den Seitenwänden angeordnet sein. Eine verschiebebewegliche Lagerung ist beispielsweise in der WO 2010/108816 A1 beschrieben. Eine rein drehbewegliche Lagerung hat den Vorteil, dass sie die Verwendung der vorstehend beschriebenen Wälzlager ermöglicht.

Um die Lagerung des Zwischenkörpers auf der Laufbuchse (z. B. die oben genannte Wälzlagerung) vor Schmutz zu schützen, ist zwischen dem Zwischenkörper und der Laufbuchse vorzugsweise eine Labyrinthdichtung vorgesehen. Eine Labyrinthdichtung erlaubt die gewünschte Relativbeweglichkeit der abgedichteten Teile, sie erschwert oder verhindert jedoch das Eindringen von Fremdkörpern aufgrund eines verschlungenen Verlaufes der Öffnungsspalte.

Die vorstehend genannte Labyrinthdichtung kann beispielsweise realisiert werden, indem gemeinsam mit der Laufbuchse mindestens ein Deckel eingeklemmt wird, dessen Rand in Axialrichtung in einen Schlitz bzw. eine Nut des Zwischenkörpers eingreift. Fremdkörper müssten in diesem Falle durch den Schlitz und um den Rand des Deckels herum wandern, um von außen in den Bereich zwischen Laufbuchse und Zwischenkörper einzudringen.

Zusätzlich oder alternativ kann zwischen dem Zwischenkörper und der ersten Seitenwand und/oder der zweiten Seitenwand ein schleifender Dichtkontakt angeordnet sein, beispielsweise in Form eines Filzringes. Vorteilhafterweise greift ein solcher schleifender Kontakt ebenfalls in einen Schlitz bzw. eine Nut des Zwischenkörpers ein, um auch hier einen abknickenden Öffnungsspalt und damit eine Labyrinthdichtung zu erzielen und die ansonsten lose Dichtung zu positionieren.

An der ersten Seitenwand und/oder der zweiten Seitenwand kann optional ein Anschlag für den Zwischenkörper angeordnet sein. Die Beweglichkeit des Zwischenkörpers lässt sich auf diese Weise auf einen gewünschten Spielraum begrenzen.

Der vorstehend genannte Anschlag kann insbesondere einen Schlitz des Zwischenkörpers durchgreifen. Mit Anfang und Ende des Schlitzes werden dann gleichzeitig zwei Grenzen für die Beweglichkeit des Zwischenkörpers gesetzt.

Der Zwischenkörper kann vorzugsweise zwei in Axialrichtung versetzt angeordnete Abtastfinger aufweisen. Zusätzlich oder alternativ können zwei in Axialrichtung versetzt angeordnete Kulissenelemente vorgesehen sein. Durch in Axialrichtung versetzte Abtastfinger bzw. Kulissenelemente können zwei unterschiedliche "Bewegungsprogramme" für den Zwischenkörper eingestellt werden, je nachdem welcher der Abtastfinger mit welchem Kulissenelement zusammenwirkt. Insbesondere kann dabei je nach Drehrichtung des Antriebskettenrades eine andere Kombination Abtastfinger/Kulissenelement zusammenwirken, wodurch der Gelenkkettenantrieb reversierbar ausgebildet werden kann.

Der Zwischenkörper kann im Allgemeinen jede beliebige Außenkontur haben, welche für ein gewünschtes Zusammenwirken mit einer Gelenkkette sinnvoll bzw. erforderlich ist. Der Zwischenkörper kann insbesondere auch eine einfache zylindrische Außenkontur haben, wodurch sich ein besonders einfacher Zwischenantrieb realisieren lässt.

Bei einem Antriebskettenrad gemäß dem dritten Aspekt der Erfindung (d. h. mit mindestens zwei Zwischenkörpern, die an demselben Kettengelenk angreifen), kann einer der zwei Zwischenkörper optional drehbeweglich am Radkörper gelagert sein.

Bei einer anderen Ausführungsform dieses Antriebskettenrades ist mindestens einer der zwei Zwischenkörper drehbar um eine Drehachse am Radkörper gelagert, wobei seine Wirkflächen zur Gelenkkette hin rotationssymmetrisch zu dieser Drehachse sind. Insbesondere kann ein solcher Zwischenkörper eine zylindrische Wirkfläche aufweisen. In diesem Falle kann sich der Zwischenkörper in Kontakt zu einer Gelenkkette mitdrehen und so den entstehenden Verschleiß minimieren.

Weiterhin kann optional mindestens einer der Zwischenkörper drehbar um eine Drehachse gelagert sein, wobei diese Drehachse einen kleineren Abstand zur Rotationsachse des Radkörpers hat als den Abstand, den die Gelenke einer umlaufenden Gelenkkette annehmen können. Der betreffenden Zwischenkörper unterstützt die Gelenkkette daher immer von "radial innen".

Bei einem Gelenkkettenantrieb, welcher einer Gelenkkette und ein Antriebskettenrad gemäß dem dritten Aspekt (mit mindestens zwei Zwischenkörpern) aufweist, ist vorzugsweise die Teilung des Antriebskettenrades kleiner als diejenige der Gelenkkette. Eine Kraftübertragung vom Antriebskettenrad zur Gelenkkette findet dann im Wesentlichen nur am ersten Kettenglied des einlaufenden Trums statt, und das Abknicken der Gelenkkette erfolgt im Wesentlichen kraftfrei. Vorteilhafterweise kann die Gelenkkette bei einem solchen Abknicken entlang der Oberfläche eines rotationssymmetrischen Zwischenkörpers radial nach innen abrollen, um die Entlastung der Kette weiter zu unterstützen.

Gelenkkettenantriebe

Die Erfindung umfasst weiterhin einen Gelenkkettenantrieb, enthaltend eine (herkömmliche oder erfindungsgemäße) Gelenkkette sowie ein damit zusammenwirkendes (herkömmliches oder erfindungsgemäßes) Antriebskettenrad. An dem Antriebskettenrad können dabei insbesondere mehrere Zwischenkörper beweglich gelagert sein, wobei die Anzahl der Zwischenkörper so gewählt ist, dass (mindestens) ein Zwischenkörper an jedes einlaufende Kettengelenk der Gelenkkette angreifen kann.

Die konkrete kinematische und/oder dynamische Auslegung des Gelenkkettenantriebes kann auf unterschiedliche Weise erfolgen. Insbesondere kann die Gelenkkette in Umschlingung (beispielsweise um ca. 90° bis ca. 180°) um das Antriebskettenrad geführt sein. Alternativ kann das Antriebskettenrad jedoch auch als ein Zvivischenantrieb wirken, wobei es in ein im Wesentlichen gerade verlaufendes Stück der Gelenkkette eingreift.

Gemäß einer bevorzugten Ausführung des Gelenkkettenantriebes sind dessen Antriebskettenrad und Gelenkkette so aufeinander abgestimmt, dass eine Kraftübertragung vom Antriebskettenrad auf die Gelenkkette im Betriebszustand nur an maximal zwei Kettengliedern gleichzeitig erfolgt. Vorzugsweise erfolgt diese Kraftübertragung im Wesentlichen (d. h. zu mehr als 70 %, vorzugsweise zu mehr als 80%, besonders bevorzugt zu mehr als 90% einer Radumdrehung von 360°) nur an einem einzigen Kettenglied. Bei einer Umschlingung des Antriebskettenrades durch die Gelenkkette kann diese Bedingung dadurch erreicht werden, dass der wirksame Teilkreis des Antriebskettenrades (etwas) kleiner ist als der ideale Teilkreis der Gelenkkette. Die Gelenkpunkte der Kette bewegen sich daher unterhalb des Teilkreises der Lagerungen. Hinter den ersten vom Antriebskettenrad gegriffenen Kettengliedern liegen die übrigen Kettenglieder dann lose (unbelastet) auf dem Antriebskettenrad auf. Dies hat verschleißtechnisch den Vorteil, dass im Wesentlichen kein Abknicken der Gelenkkette unter Kraftbelastung stattfindet.

Die erste Seitenwand und/oder die zweite Seitenwand des Antriebskettenrades (falls vorhanden) kann vorzugsweise einen Zahn aufweisen, welcher beim Betrieb des Gelenkkettenantriebes (je nach Winkelstellung des Antriebskettenrades) in die Gelenkkette eingreift, d. h. zwischen zwei Laschen eines Kettengliedes. Der Zwischenkörper kann dabei insbesondere an diesem Zahn gelagert sein. Auf diese Weise wird es möglich, den Lagerungspunkt und damit den Punkt der Kraftübertragung von der Seitenwand auf den Zwischenkörper radial weiter außen liegen zu lassen als den Kontaktpunkt und Kraftübertragungspunkt zwischen Zwischenkörper und Gelenkkette. Dies ist insbesondere bei einem umschlingenden Gelenkkettenantrieb vorteilhaft, da dann das Abknicken der Gelenkkette im Wesentlichen lastfrei erfolgen kann.

Insbesondere wenn ein zylindrischer Zwischenkörper verwendet wird, kann dieser vorzugsweise so dimensioniert sein, dass er nahezu den gesamten Raum zwischen zwei Gelenken der Gelenkkette ausfüllt. Der Zwischenkörper steht dann ständig mit einem der zwei Kettengelenke in Kontakt, wobei er hierauf Kraft übertragen kann (bzw. im Schubbetrieb hiervon Kraft übernehmen kann). Bei einer Änderung der Drehrichtung des Antriebskettenrades kann dieser Kontakt und die Kraftübertragung quasi unmittelbar auf das andere der zwei Kettengelenke wechseln.

Die Gelenkkette kann optional mit einer Rollenführung versehen sein. An den Kettenlaschen bzw. Kettengelenken sind dann seitlich überstehend Rollen angeordnet, welche an äußeren Kulissen geführt werden können (sog. "außen liegende Rollen"). Zusätzlich oder alternativ können ortsfeste Rollen bzw. Rollenreihen vorhanden sein, welche auf die Kettenlaschen einwirken und somit die Gelenkkette führen.

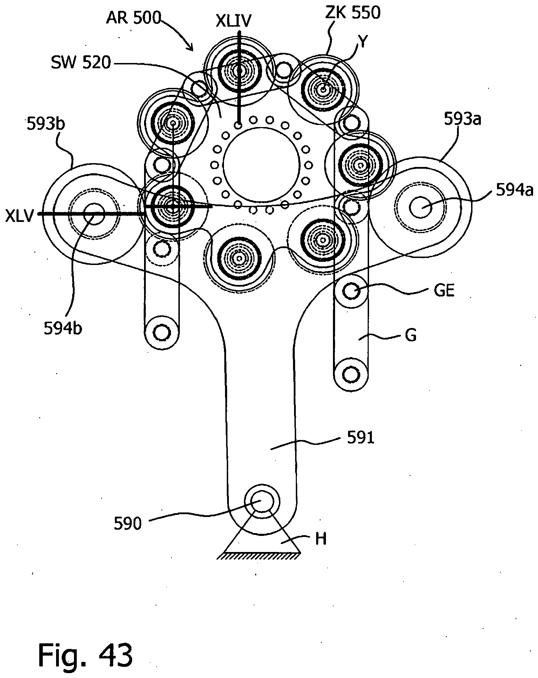

Gemäß einem siebten eigenständigen Aspekt betrifft die Erfindung einen Gelenkkettenantrieb, der ein Kettenrad und eine Gelenkkette enthält, wobei die Gelenkkette um das Kettenrad zumindest teilweise herumgeführt ist. Das Kettenrad kann an sich eine beliebige Bauweise haben. Vorzugsweise ist es in Form eines Antriebskettenrades gemäß einer Ausführungsform der vorliegenden Erfindung ausgestaltet. Der Gelenkkettenantrieb ist dadurch gekennzeichnet, dass er mindestens ein Führungselement zur Kontrolle der Bahn der Kettenglieder aufweist. Ein derartiger Gelenkkettenantrieb ist beispielsweise in Figur 43 dargestellt.

Der beschriebene Gelenkkettenantrieb hat den Vorteil, dass die Bewegung der Gelenkkette im Bereich des Eingriffs mit dem Kettenrad nicht allein durch das Zusammenwirken dieser beiden Bauteile bestimmt wird, sondern zusätzlich auch in gewünschter Weise durch das Führungselement beeinflusst werden kann. Vorzugsweise ist das Führungselement dabei unabhängig vom Kettenrad angebracht, insbesondere über eine ortsfeste Halterung (wobei das Führungselement selbst wiederum beweglich an der ortsfesten Halterung gelagert sein kann; seine Bewegung ist dann jedoch in der Regel unabhängig von der des Antriebskettenrades).

Gemäß einer bevorzugten Weiterbildung des vorstehend beschriebenen Gelenkkettenantriebes ist das Führungselement so ausgestaltet, dass es auf eine über das Kettenrad laufende Gelenkkette eine die Gelenkkette in Eingriff mit dem Kettenrad drückende Kraft ausübt. Auf diese Weise kann gewährleistet werden, dass die Gelenkkette nicht aus dem Kettenrad austritt. Weiterhin kann so erreicht werden, dass die Kraftübertragung zwischen dem (Antriebs-) Kettenrad und der Gelenkkette stets an einem gewünschten Punkt stattfindet, welcher beispielsweise vorteilhaft in Bezug auf einen minimalen Verschleiß der Gelenkkette ist. Insbesondere kann dafür gesorgt werden, dass die einlaufenden Kettenglieder sich möglichst geradlinig weiterbewegen, bis sie dann - vorzugsweise lastfrei - abknicken.

Das Führungselement kann insbesondere drehbeweglich gelagert sein. Wie bereits erwähnt, kann diese Lagerung an einer ortsfesten Halterung erfolgen, alternativ jedoch auch an anderen Bauteilen des Gelenkkettenantriebes oder seiner Umgebung.

Das genannte drehbeweglich gelagerte Führungselement ist gemäß einer Weiterbildung der Erfindung an seinen Wirkflächen zur Gelenkkette hin rotationssymmetrisch zu seiner Drehachse ausgebildet. Das Führungselement kann sich dann bei einem (Reib-) Kontakt zu einer Gelenkkette unter Wirkung der Reibung mitdrehen, so dass es zu einem verschleißarmen Wälzkontakt kommen kann.

Gemäß einer anderen Weiterbildung der Erfindung sind mindestens zwei Führungselemente vorhanden, die miteinander gekoppelt sind und von denen ein erstes Führungselement auf den einlaufenden Trum und ein zweites Führungselement auf den auslaufenden Trum einer Gelenkkette einwirkt. Eine solche Anordnung ist insbesondere dann vorteilhaft, wenn sich die Führungselemente in Bezug auf das Kettenrad zumindest teilweise gegenüberliegen (zum Beispiel bei einer 180° Umschlingung des Kettenrades durch die Gelenkkette). In diesem Falle können sich nämlich radial auswärts auf die Führungselemente wirkende Kräfte zumindest teilweise über die Kopplung kompensieren, so dass sie nicht mehr über die Halterung der Führungselemente aufgefangen werden müssen. Im günstigsten Fall reicht es dann aus, wenn die Halterung der Führungselemente deren Eigengewicht trägt.

Bei einer weiteren Ausführungsform eines Gelenkkettenantriebes mit Führungselementen wird die Gelenkkette nicht über ein Kettenrad umgelenkt. Stattdessen kann die Gelenkkette beispielsweise über Umlerikkulissen umgelenkt werden, welche z. B. die Kettenlaschen oder Rollen an den Kettengliedern führen.

Die Erfindung umfasst ferner ein Plattenband, ein Rollenband, ein Zellenband, eine Fahrtreppe bzw. einen Fahrsteig, und/oder ein Kettenbecherwerk, enthaltend mindestens ein Antriebskettenrad und/oder eine Gelenkkette und/oder einen Gelenkkettenaritrieb gemäß den oben beschriebenen Ausführungsformen.

Im Folgenden wird die Erfindung mit Hilfe der Figuren beispielhaft näher erläutert, wobei ähnliche oder identische Teile jeweils mit Bezugszeichen gekennzeichnet sind, die sich um Vielfache von 100 unterscheiden. Wichtige Teile tragen drüber hinaus identische Bezugszeichen aus Buchstaben. Es zeigt:

| | |
|---|---|
| Fig. 1 | eine erste Ausführungsform eines Antriebskettenrades mit einer umschlingenden Führung der Gelenkkette; |
| Fig. 2 | eine separate Seitenansicht der ersten Seitenwand des Antriebskettenrades von Figur 1; |
| Fig. 3 | eine separate Seitenansicht der zweiten Seitenwand des Antriebskettenrades von Figur 1; |
| Fig. 4 | einen Schnitt entlang der Linie IV-IV von Figur 1; |
| Fig. 5 | eine separate Seitenansicht des Zwischenkörpers des Antriebskettenrades von Figur 1; |
| Fig. 6 | einen Schnitt entlang der Linie VI-VI von Figur 5; |
| Fig. 7-12 | Ansichten analog zu den Figuren 1-6 von einem zweiten Antriebskettenrad, das als Zwischenantrieb einer Gelenkkette wirkt; |
| Fig. 13-18 | Ansichten analog zu den Figuren 1-6 von einem dritten Antriebskettenrad, das als reversierbarer Zwischenantrieb einer Gelenkkette wirkt; |
| Fig. 19-23 | Ansichten analog zu den Figuren 1-6 von einem vierten Antriebskettenrad, das als reversierbarer Zwischenantrieb einer Gelenkkette wirkt und zylinderförmige, drehbar gelagerte Zwischenkörper aufweist; |

Fig. 24    einen Seitenansicht eines erfindungsgemäßen Plattenbandes;

Fig. 25    Schnitte entlang der Linien A-A, B-B, und C-C von Figur 24;

Fig. 26    eine Seitenansicht der Gelenkkette eines weiteren Plattenbandes;

Fig. 27    einen Schnitt entlang der Linie XXVII-XXVII von Figur 26;

Fig. 28    eine Seitenansicht eines erfindungsgemäßen Gelenkkettenantriebes für den Stahlwasserbau;

Fig. 29    eine Seitenansicht (oben) und eine Draufsicht (unten) einer Gelenkkette mit Zwischenbuchsen;

Fig. 30, 31    Gelenkketten mit Umlenkkulissen;

Fig. 32-34    Fahrtreppen mit Zwischenantrieb;

Fig. 35, 36    Zellenbänder mit Zwischenantrieb;

Fig. 37-39    ein Kettenbecherwerk bzw. Teile hiervon;

Fig. 40    eine Kette für ein Kettenbecherwerk;

Fig. 41    eine Detailansicht zu Fig. 38;

Fig. 42    eine Seitenansicht (oben) und eine Draufsicht (unten) einer Gelenkkette mit Zwischenbuchsen für eine Fahrtreppe;

Fig. 43    eine Seitenansicht eines Antriebskettenrades mit zylindrischen Zwischenkörpern und Führungselementen, welches insbesondere im Stahlwasserbau verwendet werden kann;

Fig. 44, 45    Schnitte entlang der Linien XLIV und XLV von Figur 43;

Fig. 46    ein Antriebskettenrad mit zwei beweglich-chen Zwischenkörper pro Zahn;

Fig. 47, 48    die Befestigung von Seitenwänden an einer Welle.

In den Figuren 1 bis 6 ist eine erste Ausführungsform eines Antriebskettenrades 100 dargestellt (im Folgenden alternativ auch mit dem Bezugszeichen "AR" gekennzeichnet). Um das Antriebskettenrad 100 ist eine Gelenkkette G im umschlingenden Betrieb (mit einer 180° Umkehrung) geführt. Die Gelenkkette G besteht in bekannter Weise aus einzelnen Kettengliedern KG, welche ihrerseits jeweils aus zwei Laschen (in Figur 1 in z-Richtung hintereinander angeordnet) sowie zwei Gelenken GE bestehen, wobei die Gelenke GE aufeinander folgende Kettenglieder KG schwenkbeweglich miteinander verbinden.

Das Antriebskettenrad besteht aus zwei Seitenwänden 120 (= SW1) und 130 (= SW2), die in den Figuren 2 und 3 separat dargestellt sind. Die erste Seitenwand 120 wird durch eine flache Scheibe gebildet, die rotationssymmetrisch um ihren Umfang verteilt (acht) Zähne 121 aufweist. Das Zentrum der Seitenwand 120 wird durch ein Durchgangsloch 124 gebildet, welches ringförmig von Schraublöchern 125 umgeben ist. Durch das Durchgangsloch 124 kann eine Welle geführt werden (nicht dargestellt), mit der die Seitenwand 120 über die Schraublöcher 125 verschraubt werden kann und die die Seitenwand 120 im Betrieb drehend um eine Drehachse D (Figur 1) antreiben kann. Die erste Seitenwand 120 weist ferner in jedem ihrer Zähne 121 ein erstes (größeres) Loch 122 sowie ein kleineres Loch 123 auf, in denen ein Trägerzapfen bzw. Anschlagstift befestigt werden (siehe unten).

Die zweite Seitenwand 130 ist im Prinzip ähnlich wie die erste Seitenwand aufgebaut, d. h. sie hat insbesondere radial abstehende Zähne 131 mit ersten Löchern 132, die im zusammengebauten Zustand mit den Löchern 122 fluchten. Im Inneren besitzt die zweite Seitenwand allerdings eine große, kreisrunde Öffnung 134.

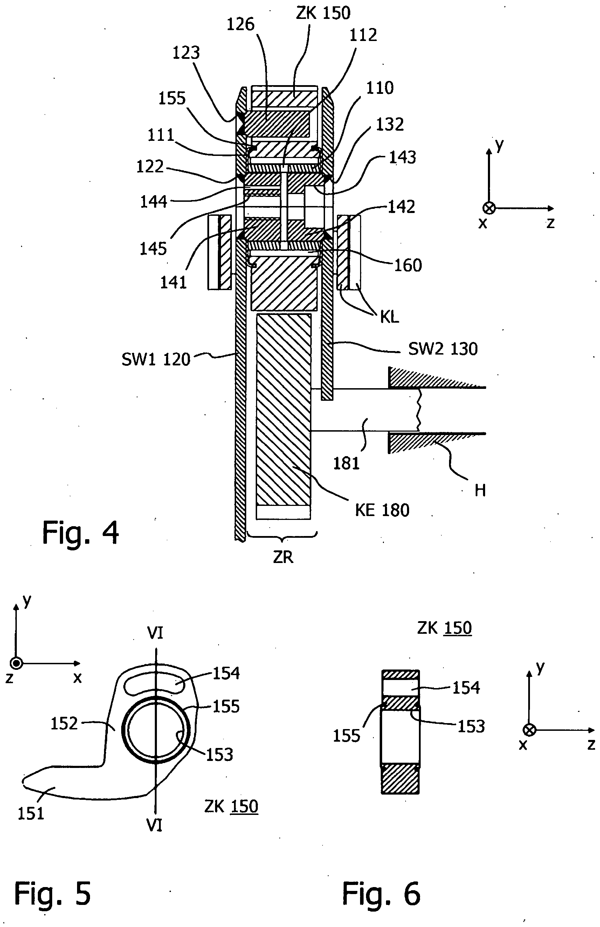

Wie insbesondere aus der Schnittansicht von Figur 4 hervorgeht, sind die beiden Seitenwände 120, 130 im zusammengebauten Zustand des Antriebskettenrades axial beabstandet voneinander angeordnet ("axial" in Bezug auf die Drehachse D). Die Verbindung zwischen beiden Seitenwänden 120, 130 erfolgt dabei über eine Laufbuchse 110 (= LB) in Form eines Hohlzylinders, die zwischen den beiden Seitenwänden kraftschlüssig eingeklemmt wird und somit deren axialen Abstand gewährleistet. Die Laufbuchse 110 wird dabei zusätzlich von einem ersten Trägerzapfen 141, der in der Öffnung 122 der ersten Seitenwand 120 festgeschweißt ist, sowie einem zweiten Trägerzapfen 142, der in der Öffnung 132 der zweiten Seitenwand 130 festgeschweißt ist, formschlüssig gehalten. Das heißt, dass die Trägerzapfen 141, 142 in die Laufbuchse 110 eingreifen. Zwischen den beiden Trägerzapfen verbleibt jedoch axial ein gewisser Spalt, der ein Einklemmen der Laufbuchse 110 ermöglicht. Damit die Laufbuchse 110 die erforderliche Stabilität aufweist, ist sie vorzugsweise aus gehärtetem Stahl hergestellt.

Des Weiteren ist im ersten Trägerzapfen 141 eine Bohrung mit einem Innengewinde 145 vorgesehen, während fluchtend hierzu im zweiten Trägerzapfen 142 eine Vertiefung 143 für den Kopf einer Schraube vorgesehen ist. Die Schraube (nicht dargestellt) kann daher von der zweiten Wand 130 aus in das Gewinde 145 eingeschraubt werden und so die beiden Trägerzapfen 141, 142 und die damit verbundenen Seitenwände 120 und 130 zusammenfügen. Die Laufbuchse 110 wird bei diesem Vorgang fest zwischen den beiden Seitenwänden eingeklemmt.

Auf der zylindrischen Laufbuchse 110 ist der Zwischenkörper 150 (= ZK) drehbeweglich gelagert. Diese Lagerung erfolgt gemäß Figur 4 über ein Wälzlager 160 zwischen der Laufbuchse 110 und dem Zwischenkörper 150. Bei dem Wälzlager kann es sich beispielsweise um ein Nadellager handeln. Auch der Zwischenkörper 150 ist vorzugsweise gehärtet.

Weiterhin ist in Figur 4 im Schnitt ein Anschlagstift 126 erkennbar, welcher im kleineren Loch 123 der ersten Seitenwand 120 festgeschweißt ist und welcher in einen kreisbogenförmigen Schlitz 154 (Figur 5) des Zwischenkörpers 150 hineinragt. Durch den Anschlagstift 126 wird die Drehbeweglichkeit des Zwischenkörpers auf einen gewünschten Winkelbereich begrenzt.

In Figur 4 ist ferner ein axial verlaufender Schmierkanal 144 im ersten Trägerzapfen 141 erkennbar, durch den von außen Schmiermittel zugeführt werden kann. Das Schmiermittel kann sich in den Raum zwischen den beiden Trägerzapfen 141, 142 verteilen und durch Löcher 112 in der Laufbuchse in das Lager 160 gelangen.

Zur Abdichtung des Lagers 160 nach außen ist eine Labyrinthdichtung vorgesehen. Diese wird im dargestellten Beispiel durch zwei Deckel 111 verwirklicht, welche zusammen mit der Laufbuchse 110 zwischen den Seitenwänden eingeklemmt sind und die mit ihren Rändern axial nach innen in den Zwischenraum ZR zwischen den beiden Seitenwänden ragen. Die Ränder der Deckel greifen dabei in eine kreisförmig umlaufende Nut 155 des Zwischenkörpers ein und realisieren so eine Labyrinthdichtung. Durch das von innen zugeführte Fett wird ferner eine Abdichtung durch einen entstehenden Fettkranz erzeugt.

In den Figuren 5 und 6 ist der Zwischenkörper 150 des ersten Antriebskettenrades 100 dargestellt. Er besitzt einen Abtastfinger 151 sowie einen Grundkörper 152, in dem eine kreisrunde Lageröffnung 153, die erwähnte Nut 155 für die Labyrinthdichtung, und der erwähnte Schlitz 154 für den Anschlag ausgebildet sind.

Mit dem Abtastfinger 151 kommt der Zwischenkörper 150 in bestimmten Winkelstellungen des Antriebskettenrades 100 (z. B. wenn er die obere Position in Figur 1 annimmt) mit einem Kulissenelement 180 (= KE) in Berührung, so dass er eine bestimmte Zwangsbewegung ausführt. Diese Zwangsbewegung ist (über die Formgebung des Abtastfingers 151 und/oder des Kulissenelementes 180) so eingestellt, dass der Zwischenkörper im Wesentlichen eine transiatorische Bewegung (relativ zur Umgebung) ausführt, bis der nächste Zwischenkörper in die Gelenkkette eingreift und die Kraftübertragung übernimmt.

Das erwähnte Kulissenelement 180 ist beim Antriebskettenrad 100 durch eine kreisrunde Rolle 180 realisiert, welche im Zwischenraum ZR zwischen den beiden Seitenwänden 120, 130 angeordnet ist und welche über eine Welle 181 (Figur 4) drehbeweglich an einer externen, ortsfesten Halterung H gelagert ist. Die Führung der Welle 181 in den Zwischenraum ZR zwischen den beiden Seitenwänden wird dabei durch die Öffnung 134 der zweiten Seitenwand 130 ermöglicht.

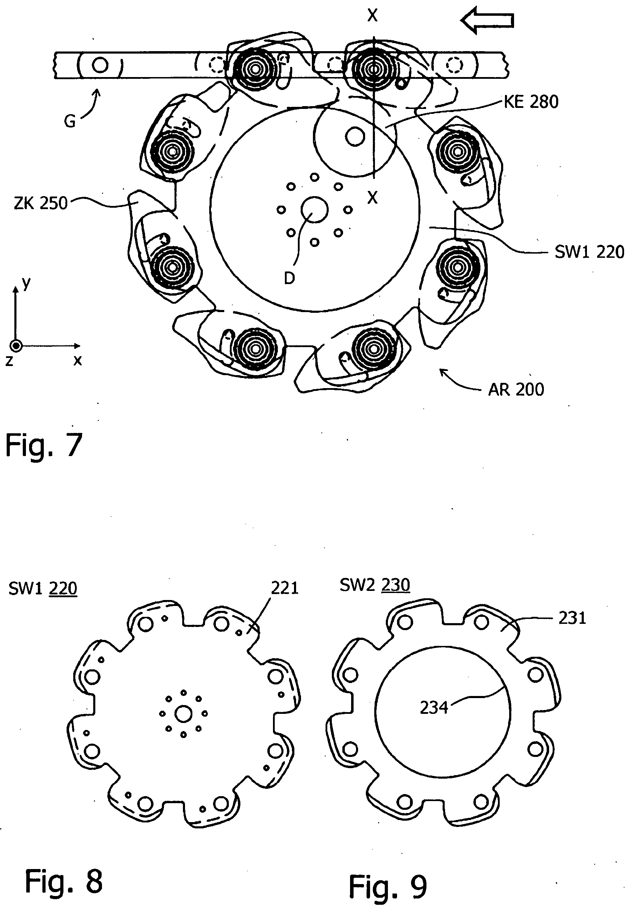

Die Figuren 7-12 zeigen eine zweite Ausführungsform eines Antriebskettenrades 200, welches insbesondere als Zwischenantrieb für eine gestreckte Gelenkkette G eingesetzt werden kann. Identische oder ähnliche Teile wie bei der ersten Ausführungsform haben um 100 erhöhte Bezugszeichen und werden im Folgenden nicht erneut im Einzelnen erläutert. Im Wesentlichen ist das Antriebskettenrad 200 in seiner Funktion gleich dem ersten Antriebskettenrad 100, wobei sich aufgrund der unterschiedlichen Wirkungsweise als Zwischenantrieb andere Geometrien bzw. Anordnungen der Zwischenkörper 250, der Seitenwände 220 und 230, sowie des Kulissenelementes 280 ergeben.

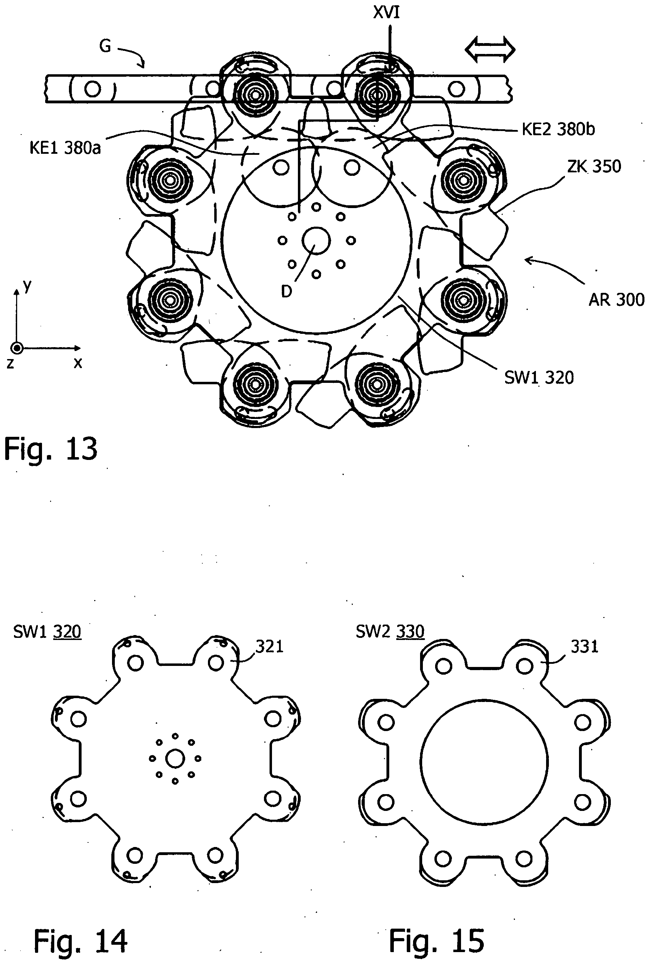

Die Figuren 13-18 zeigen eine dritte Ausführungsform eines Antriebskettenrades 300, welches ebenfalls als Zwischenantrieb für eine gestreckte Gelenkkette G eingesetzt wird, wobei jedoch ein reversierender Betrieb in beide Laufrichtungen der Kette möglich ist. Um dabei in jeder Laufrichtung das richtige Verhalten der Zwischenkörper 350 sicherzustellen, sind diese mit zwei Abtastfingern 351 a bzw. 351 b ausgerüstet, welche in Axialrichtung versetzt angeordnet (und im Übrigen spiegelsymmetrisch) sind. Korrespondierend hierzu sind zwei in Axialrichtung versetzt angeordnete, kreisrunde Kulissenelemente 380a und 380b vorgesehen, die jeweils drehbeweglich an einer ortsfesten Halterung (nicht dargestellt) außerhalb des Antriebskettenrades gelagert sind. Je nach Drehrichtung des Antriebskettenrades 300 wirken dann entweder die ersten Abtastfinger 351a mit dem ersten Kulissenelement 380a oder die zweiten Abtastfinger 351 b mit dem zweiten Kulissenelement 380b zusammen, um die gewünschte Bewegung der Zwischenkörper 350 zu erzeugen.

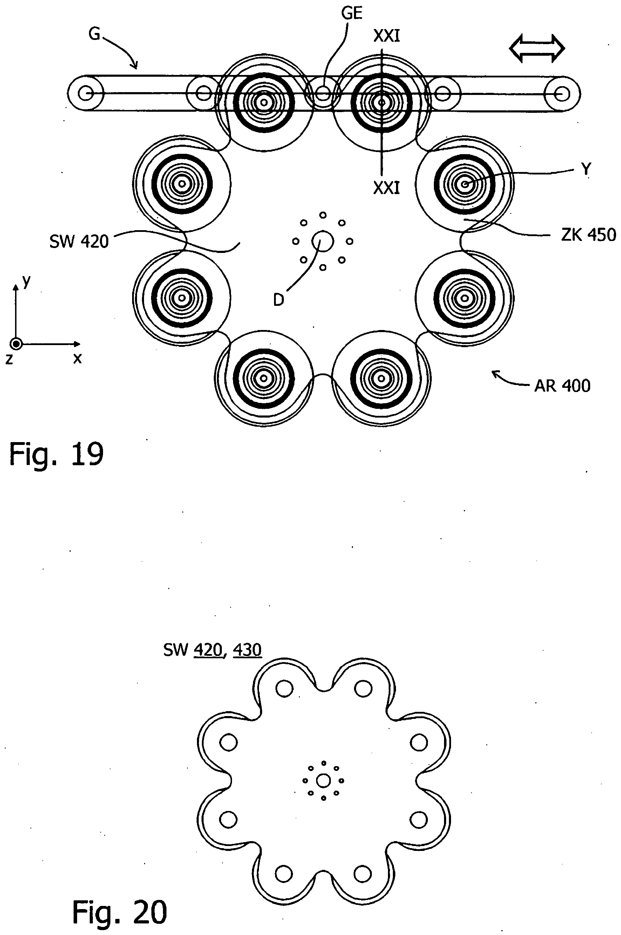

Die Figuren 19-22 zeigen eine vierte Ausführungsform eines Antriebskettenrades 400 für den Zwischenantrieb einer gestreckten Gelenkkette G. Im Unterschied zu den vorhergehenden Ausführungsformen sind hier die Zwischenkörper 450 zylinderförmig ausgebildet, so dass keine Notwendigkeit für das Abtasten eines Kulissenelementes besteht. Die beiden Seitenwände 420, 430 (= SW) des Antriebskettenrades können somit wie in Figur 20 dargestellt gleich ausgebildet werden, da kein Kulissenelement in den Zwischenraum ZR zwischen ihnen geführt werden muss.

Der Außendurchmesser der runden Zwischenkörper 450 entspricht vorzugsweise etwa dem Abstand zwischen zwei Gelenken GE der Gelenkkette G, so dass die Zwischenkörper 450 gerade in den Zwischenraum ZR zwischen den Gelenken passen. Auf diese Weise wird die Kraftübertragung optimiert und ein unmittelbar reversierbarer Betrieb erreicht.

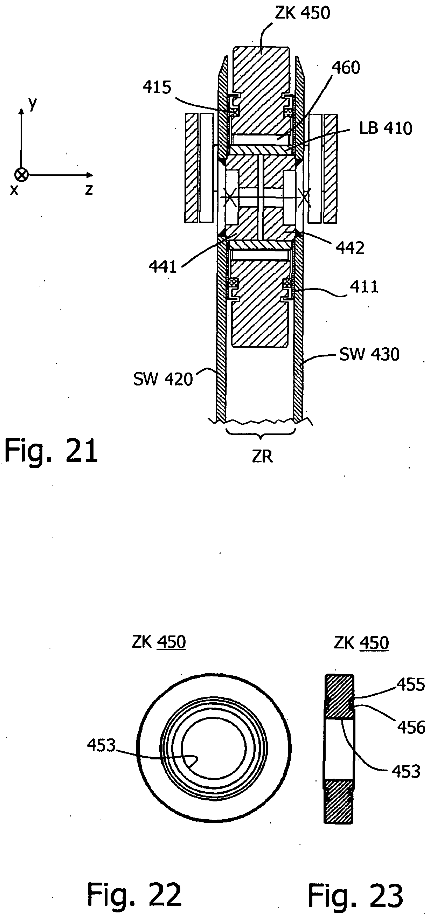

Wie die Schnittansicht von Figur 21 zeigt, kann die Lagerung der Zwischenkörper 450 wiederum auf einer Laufbuchse 410 über ein Wälzlager 460 erfolgen, wobei an jeder Seite ein Deckel 411 eine Labyrinthdichtung bildet. Da bei dieser Ausführungsform ausreichend Platz zur Verfügung steht, könnten alternativ auch zwei (oder mehr) konzentrische Deckel unterschiedlichen Durchmessers zur Ausbildung einer doppelten Labyrinthdichtung zwischen dem Zwischenkörper 450 und dem Lager 460 vorgesehen sein. Bei der dargestellten Ausführungsform wird der vorhandene Platz indes dazu genutzt, zwischen dem Rand des Deckels 411 und dem Lager 460 noch eine schleifende Dichtung unterzubringen, die hier durch einen Filzring 415 mit rechteckigem Querschnitt verwirklicht ist. Alternativ zum Filzring könnten auch anderen Materialien und/oder Ringformen verwendet werden, beispielsweise elastomere oder zelluläre Werkstoffe und/oder O-Ringe oder V-Ringe. Der Filzring 415 greift dabei in eine innere, kreisförmige Nut 456 des Zwischenkörpers 450 ein.

Des Weitern sind im Unterschied zu den vorhergehenden Ausführungsformen die beiden Trägerzapfen 441 und 442 gleich (spiegelbildlich) ausgebildet. Beide weisen Vertiefungen auf, wobei eine Vertiefung einen Schraubenkopf und die andere Vertiefung eine zugehörige Mutter aufnehmen kann.

Zusammenfassend lässt sich feststellen, dass die erfindungsgemäßen Antriebe spezifisch sehr hoch belastbar sind und (praktisch) verschleißfrei arbeiten. Durch ihren einfachen Aufbau sind diese Antriebe mit hoher Prozesssicherheit herzustellen, sehr kostengünstig, sowie von normalem Montagepersonal einfach in die Installationen vor Ort einzubauen. Die Bauweise der Antriebe ist sehr schlank, d.h. sie sind in den Installationen sehr leicht unterzubringen.

Die Befestigung der Lagerungen der Zwischenkörper an den Seitenwänden trägt den besonderen Bedingungen für den Antrieb von Ketten Rechnung. Durch diese Konstruktion vereinen die Antriebe insbesondere folgende Funktionen:

- Verbindung von rechter und linker Seitenwand;

- Verlagerung der Verschraubung nach innen - nichts stört die Kette;

- Sicherstellung des korrekten Abstandes zwischen den Seitenwänden;

- Befestigung der Laufbuchsen sowie der Deckel (für Labyrinthdichtung);

- Realisierung hoher Belastbarkeit (hohe Tragzahl);

- stufenlose Veränderung der Teilung (im Falle exzentrischer Bohrungen der Laufbuchsen);

- gute Montierbarkeit und Demontierbarkeit;

- die Übertragung der Kräfte erfolgt im Wesentlichen durch Formschluss, daher reicht üblicherweise eine Schraube pro Zahn.

Die Zwischenkörper sind vorzugsweise drehbar an sich quer erstreckenden Laufbuchsen gelagert (nicht verschiebebeweglich). Der Aufbau der Lagerung, die Befestigung dieser an den Seitenwänden, die Abdichtung / die Kapselung / der Schutz der Lagerungen gegen eindringenden Schmutz oder eindringende Medien ist bei allen Antrieben gleich. Die Wahl der Abdichtung richtet sich auch nach dem zur Verfügung stehenden Platz. Die Lagerungen sind über einen Schmierkanal mittels Fettpresse nachschmierbar.

Bei den Antrieben, bei denen aktiv die Bewegung der Zwischenkörper beeinflusst wird, erfolgt dies durch ortsfeste Rollen, auf denen die Zwischenkörper abrollen/abwälzen. Diese Rollen sind zwischen den beiden Seitenwänden platziert und wirken direkt auf die zugehörige Kontur der Zwischenkörper. Dieser Aufbau ist besonders einfach, kostengünstig, robust und sehr Platz sparend. Durch die günstigen Hebelverhältnisse ergeben sich zwischen Rollen und Zwischenkörpern relativ geringe Belastungen, welche dauerhaften Betrieb ohne Wartung ermöglichen, nicht zuletzt bedingt durch eine Härtung dieser beiden Gegenlaufpartner.

Durch Ausführung der Laufbuchsen mit exzentrischer Bohrung kann die Teilung der Antriebe in gewissen Grenzen verändert werden. Somit sind die Antriebe teilungsmäßig z.B. an eine verschlissene Kette anpassbar.

Ketten mit dem Aufbau einer Buchsenförderkette, Rollentragkette oder Hohlbolzenkette müssen gekröpft, mit Gelenkbuchse in Laufrichtung ausgeführt werden (vgl.

WO 2010/108816 A1). Ketten mit dem Aufbau einer Gallkette oder Ziehbankkette können ganz normal ausgeführt werden. Bedingt durch den Aufbau von Rolle, Zwischenkörpern und zugehörigen Anschlägen (befestigt an einer Seitenwand) kann auf weitergehende Führungseinheiten oder Kulissen verzichtet werden.

Bei einem Zwischenantrieb mit Einwirkung auf die Kette mittels Führung bzw. Rollen (z. B. Fahrtreppe) gibt es grundsätzlich zwei Möglichkeiten:

1. Die Ober- und/oder Unterseite der Kettenlaschen werden durch ortsfeste Rollen abgestützt.

2. An der Kette sind außen (d. h. außerhalb der lichten Weite der Kette) Rollen angebracht, welche durch eine Führung laufen, die sie abstützt, vorzugsweise in radialer Richtung nach außen und nach innen. Diese Rollen können natürlich auch an Anbauteilen (z.B. Tragplatten), welche an der Kette befestigt sind, angeordnet sein.

Die zweite Lösung kommt vorzugsweise dann zum Einsatz, wenn die Rollen ohnehin schon an der Kette vorhanden sind, die zu lösende Förderaufgabe diese also erfordert bzw. sinnvoll macht. Der Antrieb lässt sich dann sehr einfach ausführen. Auf die Bewegung der Zwischenkörper muss kein Einfluss genommen werden. Diese sind dann vorzugsweise kreisrund ausgeführt. Weitere Vorteile sind:

- Der (nahezu) polygoneffektfreie Betrieb der Kette, d.h. die normalerweise periodisch schwankende Kettengeschwindigkeit vergleichmäßigt sich. Dies wird insbesondere dann erreicht, wenn die Kette auf optimaler Höhe am Antrieb vorbei geführt wird.

- Die Kette bewegt sich linear (ohne radiales Auf und Ab), d.h. der Antrieb stört die Bewegung der Kette nicht, was sich insbesondere bei sensiblem Fördergut (z.B. Menschen auf einer Fahrtreppe) absolut positiv auswirkt, ja teilweise die Integration eines solchen Antriebs erst ermöglicht.

Die erfindungsgemäßen Antriebe laufen praktisch geräuschfrei. Dies ist bedingt durch äußerst geringe Geschwindigkeitsdifferenzen zwischen den Kettengelenken und den zugehörigen Zwischenkörpern. Der Impulsaustausch zwischen diesen beiden Elementen wird also praktisch Null.

Die Antriebe sind reversierbar und in beiden Richtungen kann selbst Schiebebetrieb (d. h. der Förderer dreht den Motor) realisiert werden. Die Antriebe können auch bei Triebstockantrieben und Gelenkzahntangen eingesetzt werden, wie sie z.B. bei Schleusen, Wehren und Schmiedemanipulatoren verwendet werden.

An der Kette angebrachte Rollen lassen sich nicht in jeder Installation realisieren. In diesen Fällen wird erfindungsgemäß nicht auf die Kette eingewirkt, sondern mittels Rollen auf die Bewegung der Zwischenkörper. Soll der Antrieb reversierbar sein, werden pro Ketteneingriff zwei Rollen benötigt. Auch diese sind innerhalb des Abstandes zwischen den beiden Seitenwänden, jedoch seitlich versetzt angeordnet. Somit wird sichergestellt, dass je nach Drehrichtung (bzw. genauer gesagt nach Wirkrichtung des übertragenen Drehmomentes) die eine oder andere Wälzkurve des Zwischenkörpers mit der jeweils zugehörigen Rolle in Wirkverbindung steht.

Ist Antrieb in nur einer Richtung erforderlich, ist pro Ketteneingriff nur eine Rolle erforderlich und die Zwischenkörper vereinfachen sich sinngemäß.

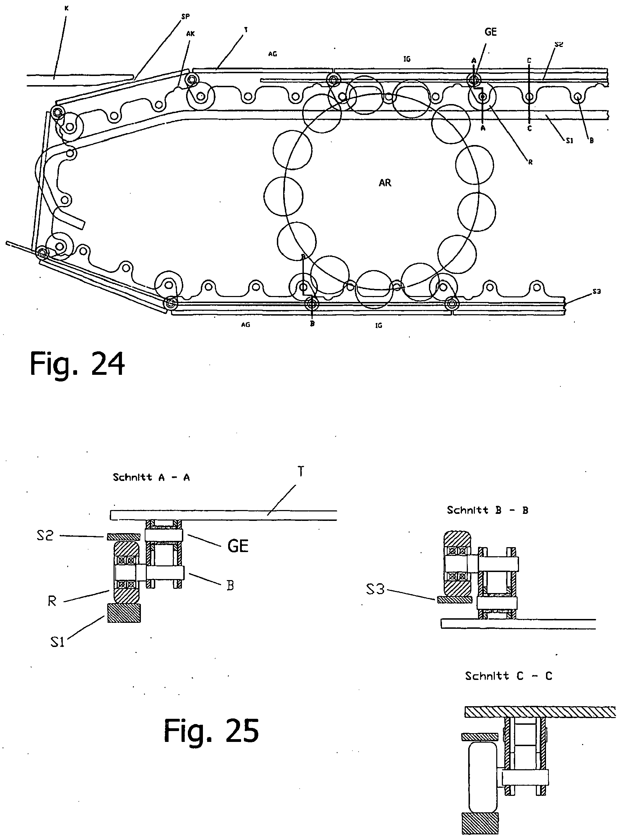

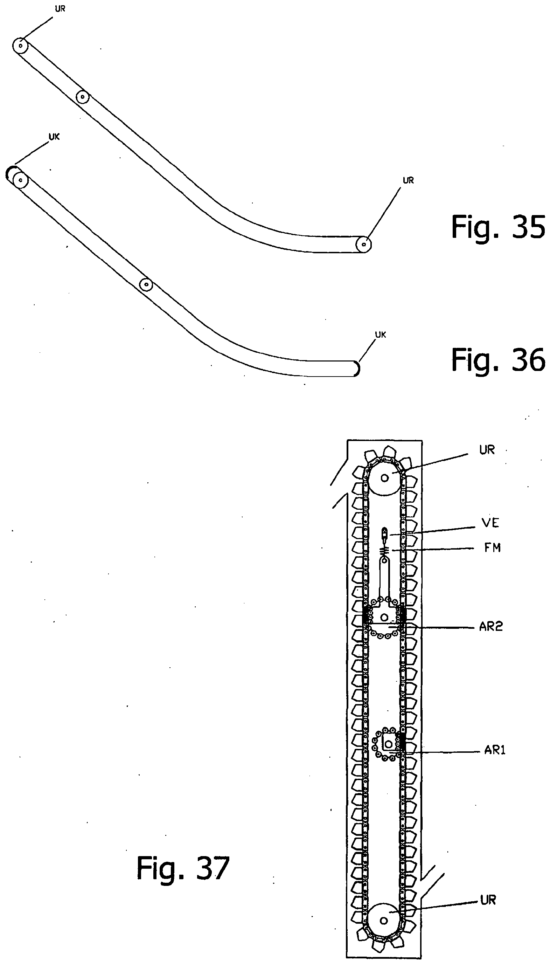

Im Folgenden werden mit Hilfe der Figuren 24-42 weitere eigenständige Aspekte der Erfindung erläutert.

So betrifft die Erfindung auch eine Gelenkkette mit Bolzen (auch "Zwischenbolzen" oder "Zwischenbuchsen" genannt), die kein Kettengelenk bilden und an denen ein Antriebskettenrad angreifen kann.

Weiterhin betrifft die Erfindung eine Gelenkkette, welche nicht über ein Kettenrad umgelenkt wird. Stattdessen kann die Gelenkkette beispielsweise über Umlenkkulissen umgelenkt werden, welche z. B. die Kettenlaschen oder Rollen an den Kettengliedern führen.

Bei Anlagen wie z. B. einer Fahrtreppe können ein oder mehrere Antriebskettenräder vorteilhaft als Zwischenantriebe eingesetzt werden. Hierdurch kann die Belastung der Gelenkkette (und damit ihr Verschleiß) beim Umlenken reduziert werden.

Ein als Zwischenantrieb eingesetztes Antriebskettenrad kann nur in den Obertrum bzw. Lasttrum eingreifen oder optional zusätzlich in den Untertrum bzw. Leertrum. Letzteres ist insbesondere beim am höchsten gelegenen Antriebskettenrad einer nicht horizontal verlaufenden Kettenstrecke (z. B. Fahrtreppe) sinnvoll.

Ein weiterer Gelenkkettenantrieb gemäß der Erfindung ist dadurch gekennzeichnet, dass die Gelenkkette über ein Antriebskettenrad geführt wird, wobei das Abknicken der Kettenglieder (zumindest näherungsweise) lastfrei erfolgt. Insbesondere kann bei einem solchen Gelenkkettenantrieb die Teilung des Antriebskettenrades geringfügig (z. B. 0,5% - 5%) kleiner sein als die Teilung der Gelenkkette.

Um die um ein Umlenkkettenrad abknickenden Kettenglieder einer Gelenkkette auf einer definierten Bahn zu führen, können (vorzugsweise ortsfeste) Führungselemente vorgesehen werden. Diese können beispielsweise außen angeordnete Rollen und/oder innen (d. h. auf der Seite des Kettenrades) angeordnete Kulissen sein, welche auf die Kettenglieder einwirken. Eine solche Führung ist insbesondere bei lastfrei abknickenden Gelenkketten vorteilhaft.

Der erste Abknickwinkel an einer Umlenkstation (z. B. an einem Umlenk-Kettenrad oder der vorgenannten Umlenkkulisse) wird vorzugsweise sehr klein gewählt, beispielsweise kleiner als 20°. Der genannte "erste Abknickwinkel" eines betrachteten Kettengliedes ist dabei definiert als der maximale Abknickwinkel, den dieses Kettenglied (relativ zur vorherigen geradlinigen Bewegung) annimmt, bis das nächste Kettenglied die Knickbewegung beginnt.

Kettenförderer

Mit Hilfe der Figuren 24-27 wird nun ein Kettenförderer gemäß der Erfindung beispielhaft beschrieben. Dieser Aspekt der Erfindung betrifft Kettenförderer, insbesondere Plattenbandförderer zur Förderung von Schüttgut und Stückgut, auch zur Förderung von Automobilen und Nutzfahrzeugen in der Automobil- bzw. Nutzfahrzeugindustrie.

Die Plattenbänder sind mit einem oder mehreren Strängen Förderketten versehen. Die Förderketten und die Rollen tragen die Lasten ab, welche durch das Fördergut sowie das Eigengewicht der Tragplatten und Ketten in das System eingeleitet werden. Ferner übertragen sie die Zug- oder Schubkräfte, welche sich aus der Reibung und ggf. zu leistenden Hubarbeit (falls das Fördergut bergauf oder bergab transportiert wird) ergeben.

Die Erfindung ermöglicht es, Ketten mit deutlich vergrößerter Gelenkteilung zu versenden bei insgesamt nur niedriger Bauhöhe des Förderers bzw. Plattenbandes.

Stand der Technik: Plattenbänder auf Förderkettenbasis werden üblicherweise mit normalen Kettenrädern angetrieben. Die Kettenräder dienen zugleich der Umlenkung der Ketten. Der Teilkreis der Kettenräder - und damit indirekt die Bauhöhe des Förderers resultiert aus der Teilung der Kette und der Zähnezahl der Kettenräder. Um eine geringe Bauhöhe zu realisieren setzt man eine Kette mit kleiner Teilung ein. Sehr nachteilig ist hier, dass die Kosten für Ketten, Rollen und Tragplatten stark ansteigen. Es werden pro Meter Plattenband entsprechend mehr Bauteile benötigt, was die Kosten erhöht.

Den Zusammenhang zwischen Teilkreisdurchmesser D0 der Kettenräder, Kettenteilung p, Zähnezahl Z und Teilungswinkel Tau beschreiben folgende Formeln:

$$D0 = p / \sin (180° / Z)$$

$$Tau = 360° / Z$$

Die Gelenkbolzen der Förderketten sind bei Plattenbandförderern üblicherweise einseitig verlängert und mit außen liegenden Rollen (zum Abtragen der Lasten im Obertrum und zur Rückführung der Ketten im Untertrum) ausgeführt. Zwischen dem Außendurchmesser dieser Rollen und - wenn sich die Kette(n) im Obertrum befindet / befinden - den Unterseiten der Tragplatten muss ein gewisser Platz vorhanden sein. Die Rückführung der Ketten im Untertrum erfolgt über Laufschienen welche ebenfalls eine gewisse Dicke haben. Hieraus resultiert, dass Plattenbänder nach üblicher Bauweise ein relativ großes Maß Mitte Kette (= Mitte Gelenk) bis Oberkante Tragplatte haben.

Dieser Fakt sowie der relativ große Abknickwinkel Tau - resultierend aus der Zähnezahl der Kettenräder- bewirken, dass sich bei der Umlenkung der Kette zwischen den Tragplatten große Spalte ergeben, welche sich nicht ohne Weiteres durch z.B. an der Unterseite der Tragplatten untergeschweißte Spaltabdeckungen verschließen lassen. Da die Plattenbänder auch als Montagebänder eingesetzt werden, sich also häufig Werker auf den Montagebändern befinden, stellen diese Spalte ein Sicherheitsrisiko dar. Mit steigenden Lasten müssen Rollen mit größerem Durchmesser eingesetzt werden was die Problematik weiter verschärft, bedingt durch größeres Maß Mitte Kette bis Oberkante Tragplatte.

Gegenstand der Erfindung

Ein Aufbau des Förderers gemäß dieser Erfindung trennt Antrieb und Umlenkung funktional voneinander. Der Antrieb erfolgt durch ein oder mehrere Kettenräder gemäß der vorliegenden Anmeldung und/oder gemäß der WO2010/108816A1 welche durch die Erwähnung hier vollumfänglich zum Bestandteil dieser Patentanmeldung wird.

Die Kette, u. a. bestehend aus Innengliedern IG und Außengliedern AG oder gekröpften Gliedern (nicht dargestellt), wird im gestreckten Zustand angetrieben. Das zuvor genannte Kettenrad AR gemäß der vorliegenden Anmeldung und/oder gemäß der WO2010/108816A1 kann in Wirkverbindung mit nur einem Trum (z.B. nur zum Obertrum) stehen, hat jedoch vorzugsweise Kontakt zu Ober- und Untertrum der Ketten was insbesondere ermöglicht, dass die Ketten bei der Umlenkung (im Wesentlichen) frei von Zuglast abknicken. Dies verhindert Gelenkverschleiß und ermöglicht, das Abknicken der Kette völlig variabel - also nicht zwingend über einen (mehr oder weniger) konstanten Umlenkradius - zu gestalten. Insbesondere ist hier das Abknicken der Kette im Obertrum gemeint. Dies erfolgt nur um einen sehr kleinen Winkel a. Dies ermöglicht, dass der konstruktive Spalt SP zwischen der Oberseite der Tragplatten T und der oder den ortsfest angeordneten Kammplatte(n) K sehr klein ausgeführt werden kann. Im Verhältnis zu der großen Gelenkteilung der Kette ist dieser Spalt geradezu minimal.

Würde das variable Abknicken der Kette(n) unter Last erfolgen hätte dies eine ungleichförmige Bewegung von Ober- oder/und Untertrum zur Folge. Die Laufeigenschaften (bzgl. möglichst gleichmäßiger Kettengeschwindigkeit) eines solchen Förderers wären inakzeptabel schlecht.

Der Antrieb der Kette(n) erfolgt nicht durch Einwirkung des Kettenrades direkt auf die Kettengelenke, sondern auf eine darunter gelegene Reihe von Bolzen B (auch "Zwischenbolzen" genannt), welche mit üblichen Mitteln an den Laschen der Kette befestigt sind. Ein ganzzahliges Vielfaches der Teilung dieser Bolzen entspricht der Gelenkteilung der Kette. Beispiel: Bolzenteilung 100 mm, Gelenkteilung 300 mm.

Die Bolzen in der Nähe der Kettengelenke sind vorzugsweise einseitig nach außen weisend verlängert und haben auf deren verlängertem Ende eine außen liegende Rolle R. Diese ist mit üblichen Mitteln gleit- oder wälzgelagert sowie entsprechend gesichert. Damit die Kette um einen möglichst großen Winkel abknicken kann und somit u. a. niedrige Bauhöhe des Förderers realisiert wird können die Kettenlaschen mit einer Ausklinkung AK versehen sein.

Im Abstand von ca. 3 m (zeichnerisch nicht dargestellt) kann jeweils einer dieser Bolzen oder auch einer der Gelenkbolzen zur Förderermitte weisend verlängert sein. Hier wird zur Vereinfachung der Montage eine Verbindungsachse aufgesteckt bzw. befestigt, worüber die Kette zum Mehrfachstrang verbunden wird. Somit ist man bei der Montage des Plattenbandförderers in der Lage, zunächst Ketten und Achsen in die entsprechenden Kanäle des Förderers einzuziehen und die Ketten zu Endlossträngen zu verbinden. Anschließend werden dann die Tragplatten T auf die Ketten montiert.

Zur Seitenführung der Ketten werden an den Ketten (oder an den Tragplatten) Seitenführungsrollen angebracht oder / und die Laufrollen mit Bund (sog. Bundlaufrollen) ausgeführt. Dies ist in den beiliegenden Figuren nicht dargestellt.

Die Tragplatten können zur Verstärkung entsprechend ausgesteift sein, z.B. durch ein oder mehrere untergeschweißte Stahlprofile. Ferner sind sie auf übliche Weise an den Kettengliedern befestigt. Beides ist in den beiliegenden Figuren nicht näher dargestellt.

Damit bei Einwirkung großer Lasten auf die Tragplatten (z.B. durch Einwirken von Radlasten in der Automobilindustrie) nicht das folgende Kettenglied abhebt, sind die Rollen R im Obertrum (bzw. dem Trum, wo die Tragplatten belastet sind) vorzugsweise durch zwei Laufschienen S1 und S2 geführt. Im Unterrum (bzw. dem Trum wo die Tragplatten T nicht belastet sind) reicht üblicherweise eine Laufschiene S3 aus.

Der Drehpunkt, um den die Kettenglieder und die Tragplatten abknicken sind die Kettengelenke GE. Durch Bauweise der Ketten bzw. des Plattenbandes gemäß dieser Erfindung ist es möglich, die Kettengelenke sehr nahe an den Tragplatten anzuordnen.

Bedingt dadurch und durch den sehr kleinen Abknickwinkel im Obertrum (wie bereits weiter oben erwähnt) ergeben sich beim Abknicken im Obertrum nur sehr kleine Spalte. Diese lassen sich durch Befestigen einer (gekrümmten) Spaltabdeckung problemlos verschließen. Die Blechhaut des Plattenbandes wird praktisch nicht unterbrochen. Dies ist ein Vorteil Punkto Betriebssicherheit und Arbeitssicherheit.

Die Kettenräder AR sind vorzugsweise am Anfang und Ende des Förderers angeordnet. Mindestens eines dieser Kettenräder ist aktiv angetrieben, es können auch beide bzw. alle Kettenräder aktiv angetrieben sein.

An der Umlenkstation des Förderers macht ein - auch wenn nicht aktiv angetriebenes - Kettenrad AR aber trotzdem Sinn, damit die Kette frei von Zuglast abknicken kann. Das Kettenrad dient dann praktisch als Zugentlastung für die Kette. Des Weiteren wird dort das Kettenrad AR benötigt, damit auch an der Umlenkseite die positiven Laufeigenschaften bezüglich gleichmäßiger Kettengeschwindigkeit erhalten bleiben.

Auf der Förderstrecke kann zusätzlich mind. ein Kettenrad angeordnet sein. Dies reduziert die Zugkräfte in der Kette. Bei Einsatz rel. leichter und kostengünstiger Ketten sind somit auch große Fördererlängen realisierbar.

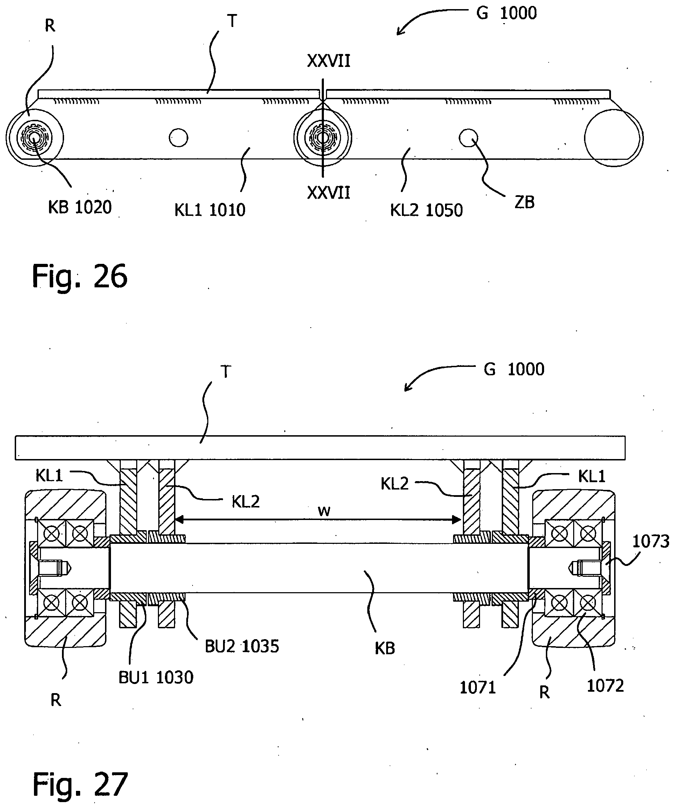

Figur 26 zeigt eine Seitenansicht auf zwei Kettenglieder einer Gelenkkette 1000 (= G) gemäß einer weiteren Ausführungsform eines Platteribandes. Die hierbei verwendeten Konstruktionsprinzipien können auch bei anderen Anwendungen mit Vorteil eingesetzt werden. Figur 27 zeigt einen zugehörigen Schnitt entlang der Linie XXVII-XXVII von Figur 26.

Das in Figur 26 linke Kettenglied besteht aus zwei axial beabstandeten Außenlaschen 1010 (= KL1), während das rechte Kettenglied aus zwei Innenlaschen 1050 (= KL2) besteht. An den genannten Kettenlaschen können optional jeweils ein oder mehrere Zwischenbolzen bzw. Zwischenbuchsen ZB der oben erläuterten Art angebracht sein.

Der Aufbau eines Kettengelenkes ist in Figur 27 erkennbar. Das Kettengelenk enthält einen Kettenbolzen 1020 (= KB), auf welchem in einem verhältnismäßig kurzen axialen Abstand w zwei Außenlaschen KL1 und zwei Innenlaschen KL2 gelagert sind. Die Lagerung erfolgt dabei über Buchsen 1030 (= BU1, für die Außenlaschen KL1) und 1035 (= BU2, für die Innenlaschen KL2). Diese Buchsen sind typischerweise in Teilungslöcher der Kettenlaschen eingepresst und vorzugsweise gehärtet. Sofern die Buchsen BU1, BU2 wie dargestellt Bunde haben, sind diese vorzugsweise gegeneinanderweisend angeordnet.

Der typischerweise gehärtete Kettenbolzen KB kann zwischen den Kettenlaschen zylindrisch mit gleichbleibendem Durchmesser sein, was eine besonders einfache Herstellung ermöglicht.

An den Kettenlaschen KL1, KL2 können Anbauelemente angebracht sein. Im dargestellten Fall sind beispielsweise Tragplatten T direkt an den Außenlaschen KL1 bzw. Innenlaschen KL2 angeschweißt.

Der Kettenbolzen KB kann optional zu einer oder zu beiden Seiten verlängert sein, um beispielsweise dort Laufrollen zu tragen. Im dargestellten Fall sind die vorzugsweise gehärteten zwei Laufrollen R über eine Lagerung 1072 (z. B. Rillenkugellager) auf Überständen des Kettenbolzen gelagert, wobei sie durch Distanzringe 1071 auf einer gewünschten axialen Position gehalten werden (und eine axiale Verschiebung der Kettenlaschen verhindern). Außenseitig können die Rollen R wie dargestellt über eine Unterlegscheibe axial fixiert werden, die mit einer Befestigung 1073 (z. B. einer Schraube) am Kettenbolzen KB festgelegt ist.

Der beschriebene einfache Aufbau der Gelenkkette 1000 wird insbesondere dann möglich, wenn diese in einem Gelenkkettenantrieb eingesetzt wird, bei dem ein lastarmes oder lastfreies Abknicken der Kettenglieder erfolgt. In diesem Falle kann nämlich die Gelenkfläche entsprechend reduziert werden, und anstelle von sich über die gesamte axiale Länge des Kettenbolzens erstreckenden Buchsen können wie dargestellt kurze Trägerbuchsen eingesetzt werden. Hieraus resultieren weitere Vereinfachungen des Aufbaus. Beispielsweise können die Kettenlaschen direkt an eine Tragplatte T oder andere Anbauelemente angeschweißt werden, was zusätzliche Schraubverbindungen oder ein Abwinkeln der Laschen und dergleichen erspart.

Die Montage (und Demontage) der Gelenkkette G erfolgt einfach dadurch, dass die Kettenbolzen KB durch die Innen- und Außenlaschen gesteckt und dann mit üblichen Mitteln gesichert werden.

Während des Betriebs der Gelenkkette sind die Kettenbolzen KB gegen Herdrehung (Mitrotieren) durch die Klemmwirkung geschützt, die aus der Ketten-Zugkraft und/oder aus der Auflast auf die Kettenlaschen resultiert (das Drehmoment der Rollenlagerung ist ohnehin sehr klein).

**Stahlwasserbau**

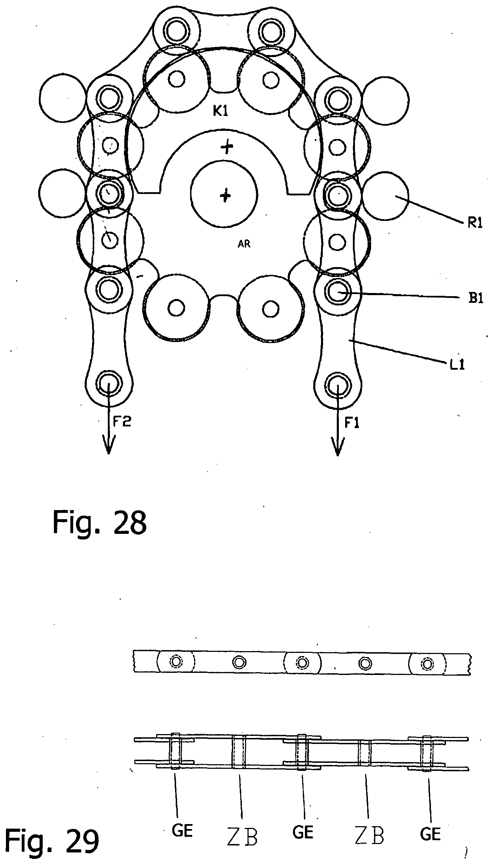

Mit Hilfe der Figur 28 wird nun eine weitere sinnvolle Anwendung der Erfindung im Stahlwasserbau beispielhaft beschrieben. Im Stahlwasserbau werden z.B. bei Schleusen und Wehren spezielle Lastketten verwendet. Mittels dieser Ketten werden z.B. - je nach anfallender Wassermenge / anfallendem Volumenstrom Wehrfelder mehr oder weniger geöffnet bzw. geschlossen.

Die Ketten sind in der Vergangenheit meist ausgeführt als normale Gallketten. Diese sind relativ kostengünstig, bieten jedoch - auch bei guter Schmierung / Wartung - nur relativ wenig Verschleißwiderstand. Ihre Lebensdauer ist daher nicht hoch.

Deshalb werden diese Ketten heute meist in spezieller Bauweise ausgeführt. Dabei sind in die Teilungslöcher der Laschen spezielle Gleitlager aus Buntmetall eingepresst. Diese stehen in Kontakt mit den Kettenbolzen. Bolzen und Laschen dieser Ketten sind meist allseitig bearbeitet und aus rostfreien Werkstoffen. Der Eingriff der Kettenräder erfolgt pro Gelenk meist an 3 Stellen (links, Mitte und rechts). Auch die Kettenräder sind entsprechend aufwändiger und teurer. Die Lebensdauer dieser Ketten ist zufriedenstellend. Ihr Preis jedoch ist, bedingt durch all diese Maßnahmen / Details, extrem hoch und beträgt ein Vielfaches des Preises einer normalen Gallkette.

Gegenstand dieser Erfindung ist diesbezüglich ein besonderer Kettenantrieb, welcher es ermöglicht, normale und kostengünstige Ketten zu verwenden und diese verschleißfrei bzw. mit nur äußerst geringem Verschleiß zu betreiben - auch bei fehlender Schmierung. Die Verwendung der oben beschriebenen sehr aufwändigen und teuren Ketten ist also nicht erforderlich. Dies ist ein wichtiger wirtschaftlicher Vorteil.

Erreicht wird dies dadurch, dass die Kettengelenke frei von Belastung abknicken.

Der Antrieb erfolgt vorzugsweise durch ein oder mehrere Kettenräder gemäß der vorliegenden Anmeldung und/oder gemäß der WO2010/108816A1, insbesondere solche ähnlich den Figuren 19 - 23.

Die Kette ist z.B. ausgeführt als Stahlgelenkkette, vorzugsweise als Gallkette. Die Teilung der Kettenräder (und somit auch der Teilkreis der Kettenräder) ist geringfügig kleiner als die Teilung der Kette gestaltet. Somit überträgt im auf- bzw. ablaufenden Kettentrum praktisch nur jeweils ein Zahn die Zugkraft auf die Kette. Alle anderen Zähne übertragen praktisch keine Kraft auf die Kettenbolzen. Somit sind die Kettenlaschen in diesem Bereich praktisch frei von Zuglast. Beim Abknicken der Kettenglieder können Relativbewegungen zwischen diesen unbelasteten Laschen L1 und den Gelenkbolzen B1 verschleißfrei stattfinden. Die Bolzen B1 werden selbsttätig durch die noch - oder gerade wieder - belasteten Laschen durch das sich hierdurch ergebende Reibmoment in ihrer Winkelstellung gehalten. Die sich beim Abknicken der Kettenglieder notwendigennreise ergebende Relativbewegung Laschen L1 / Bolzen B1 findet erfindungsgemäß nur an uribelasteten Laschen - und somit verschleißfrei - statt.

Somit ist erreicht, das sehr verschleißanfällige jedoch kostengünstige Ketten einfachster Bauart durch Verwendung dieses Antriebes verschleißfrei betrieben werden können. Dies auch ohne Schmierung der Gelenke.

**Details**

Die Kette ist vorzugsweise ausgeführt als Gallkette. Gallketten sind typische Lastketten. Sie sind relativ kostengünstig herzustellen. Gallketten haben nicht, wie bei ungekröpften Buchsenförderketten typische Innenglieder (mit Innenlaschen und Gelenkbuchsen) und Außenglieder (mit Außenlaschen und Gelenkbolzen) sondern nur Gelenkbolzen B1 und Laschen L1. Es gibt zwar innere und äußere Glieder, prinzipiell sind diese jedoch gleich - alle Laschen L1 scharnieren direkt auf den Bolzen B1. Der größte Vorteil dieser Ketten ist die Übertragung sehr hoher Zugkräfte F1 und F2. Man nimmt in Kauf das diese Ketten schnell verschleißen.

In Verbindung mit den erfindungsgemäßen Antrieben hat dieser Kettenaufbau den Vorteil, dass alle Glieder (ohne irgendwelche Sondermaßnahmen wie z.B. Kröpfen der Kettenlaschen) bauartbedingt lastfrei abknicken. Die belasteten Laschen halten dabei sozusagen den betreffenden Bolzen selbsttätig fest und die unbelasteten Laschen knicken ab - vollführen die Relativbewegung.

Vorzugsweise sind die Kettenlaschen L1 tailliert ausgeführt. Dies ermöglicht auf einfache Weise die Führung der Kette auf idealer Linie sowie die einfache Abstützung der Laschen an mindestens einer ortsfesten Rolle R1.

Die Führung der Kette erfolgt in radialer Richtung nach außen durch mindestens eine ortsfeste Rolle R1, welche auf die Kettenlaschen einwirkt. Vorzugsweise sind diese Rollen angeordnet als Rollenpaare, welche rechts und links auf die Kettenlaschen einwirken.

In radialer Richtung nach innen erfolgt die Führung der Kette durch mind eine ortsfeste Kulisse, welche ebenfalls auf die Kettenlaschen einwirkt. Auch diese Kulissen sind vorzugsweise beidseitig angeordnet. Als Werkstoffe kommen Stahl (gehärtet / ungehärtet), Buntmetall oder Kunststoff (mit oder ohne Faserverstärkung) in Frage.

**Korrosion**

Durch Wegfall der Schmierung kann Korrosion auftreten, welche zum Versteifen der Kettengelenke führt. Dem kann bei Verwendung dieser erfindungsgemäßen Antriebe sehr einfach begegnet werden durch Vergrößerung der Laschenbohrungen und natürlich entsprechende Korrektur der Laschenteilung wodurch sich mehr Spiel Laschenbohrung / Bolzen ergibt. Distanzscheiben (ggf. aus Buntmetall oder Kunststoff) und ausreichend axiales Spiel verhindern ein Festkorrodieren auf den Planflächen zwischen den Laschen.

Vergrößerung des Spieles Laschenbohrung / Bolzen macht nur Sinn bei Verwendung dieser erfindungsgemäßen Antriebe - dort findet die Relativbewegung unbelastet statt.

Im Falle der Verwendung gewöhnlicher (starrer) Kettenräder würde der Verschleiß der Ketten - insbesondere der Anfangsverschleiß - zunehmen, da sich die Reibfläche Bolzen / Laschenbohrung verkleinert. Diese Reibfläche würde mit größer werdendem Spiel schließlich nur noch zur Linienberührung werden.

Mit Hilfe der Figuren 29 - 42 werden nun weitere Ausführungsformen der Erfindung beispielhaft beschrieben.

**Generelles zu Kette und Antrieb**

Aus Kostengründen sollten Ketten mit möglichst großer Teilung verwendet werden. Dies bietet Vorteile in der Herstellung der Ketten. An vielen Ketten werden Anbauteile wie z.B. Achsen, Laufrollen, Tragplatten, Stahlzellen, Becherzellen usw. befestigt um die entsprechenden Aufgaben in den Fördereinrichtungen oder den Anlagen zu erfüllen. Da diese häufig an jeder Teilung bzw. jedem Kettenglied befestigt werden gibt es also auch hier kostenmäßig einen Zusammenhang mit der Teilung der Kette. Je größer die Teilung, desto weniger Anbauteile pro Meter also auch desto weniger Kosten pro Meter. Je nach Aufbau der Kette und je nach Anbauteilen kommen hier erhebliche Summen zustande.

Generell kommen alle Arten von Gelenkketten in Frage. Dies sind z.B. Buchsenförderkette, Rollentragkette, Buchsenkette, Gallkette usw.. Insbesondere kommt natürlich der Buchsenförderkette die größte Bedeutung zu, insbesondere aufgrund ihres guten Preis- / Leistungsverhältnisses sowie, was die Gelenke betrifft, ihres relativ hohen Verschleißwiderstandes.

Gestaltet man die Förderkette um - hin zu größeren Teilungen - ergeben sich also einerseits Optimierungspotentiale, andererseits aber auch Probleme.

Probleme sind z.B. die mit der Teilung - bei gegebener Zähnezahl an den Kettenrädern - im gleichen Verhältnis mitwachsenden Durchmesser an Antriebs- und Umlenkkettenrädern. Man benötigt also deutlich mehr Bauraum für Antriebs- und Umlenkstation und häufig vergrößert sich auch die Höhe der Förderanlage oder allgemein der Anlage. Dieser Bauraum steht häufig nicht zur Verfügung. Ein weiteres Problem sind die stark ansteigenden Drehmomente an den Antrieben. Hier werden Antriebsmotoren benötigt, welche sehr hohe Drehmomente aufbringen können. Natürlich bringen diese Motoren hohe Kosten mit sich. Teilweise sind Motoren in dieser Größe sogar gar nicht verfügbar. Man sieht also, der aus Sicht der Kette und der daran befestigten Anbauteile bevorzugte Aufbau der Kette mit großer Teilung ist längst nicht überall zu realisieren. Manchmal ist aus Sicht der Gesamtkosten dieser Aufbau sogar aufwändiger, d.h. bei Kette und deren Anbauteilen gesparte Kosten entstehen bei Antrieben dann verstärkt insgesamt steigen also die Kosten.

Abhilfe schaffen könnte da die Reduzierung der Zähnezahlen an Antriebs- und Umlenkrädern. Man benötigt weniger Bauraum und die Antriebs-Drehmomente sinken. Zugleich ergibt sich jedoch ein neues Problem, nämlich die ungleichmäßige Geschwindigkeit der Ketten. Mit größer werdenden Teilungen und / oder kleiner werdenden Zähnezahlen an Antriebs- und Umlenkrädern verstärkt sich die Ungleichförmigkeit der Kettengeschwindigkeit. Dies entsteht durch den sog. Polygoneffekt. Bedingt durch polygonale Auflage der Kette auf den Antriebs- bzw. Umlenkrädern schwankt in der Kraftübertragung der wirksame Hebelarm. Dadurch entstehen (bei Antrieb der Kettenräder mit konstanter Winkelgeschwindigkeit) schwankende Kettengeschwindigkeiten. Je nach dem, in welcher Anlage die Ketten installiert sind, kann dies zum Problem werden. Teilweise werden die Ketten hierdurch auch zu Schwingungen angeregt was besonders problematisch sein kann. Wie auch immer - in jedem Fall sind diese Geschwindigkeitsschwankungen unerwünscht. Natürlich sind mit schwankenden Hebelarmen auch schwankende Drehmomente im Antrieb verbunden. Antriebe sind also (auch) für diese Schwankungen entsprechend auszulegen.

Es besteht die Möglichkeit Kettenräder polygonkompensiert anzutreiben. Hierzu wird die Winkelgeschwindigkeit der Kettenräder von Teilung zu Teilung verändert, also stets den aktuellen Eingriffsverhältnissen angepasst. Maximaler Hebelarm geht dabei zeitgleich einher mit minimaler Winkelgeschwindigkeit und umgekehrt usw..

Treibt man die Antriebs-Kettenräder polygonkompensiert mit ungleichförmiger Winkelgeschwindigkeit an, kann man die Zähnezahlen an den Kettenrädern ein Stück weit reduzieren. Allerdings kommt man hier nicht unter eine bestimmte Mindestanzahl an Zähnen. Diese ist natürlich abhängig von der jeweiligen Anlage und vom Umschlingungswinkel am Kettenrad.

Wenn man die Anzahl der Zähne reduziert, vergrößert sich natürlich der Teilungswinkel, d.h. die Kettengelenke knicken um einen größeren Winkel ab. Dies führt zu vergrößertem Gelenkverschleiß.

Desweiteren führt es zu größerer linearer oszillierender Bewegung (sog. Pumpbewegung) insbesondere der Umlenkstation. Diese lineare Bewegung gleicht dabei aus, was die Geometrie des Polygons der Ketten um die Kettenräder verlangt. Es wird dabei insbesondere die Umlenkstation mit elastischen Elementen (insbesondere Federn) abgestützt. Diese elastischen Elemente sorgen für einigermaßen konstante Vorspannung der Ketten.

Die Kette ist in diesem Zusammenhang als starr anzusehen. Sie kann - abgesehen von geringfügigen elastischen Längenänderungen - diese Längenunterschiede nicht ausgleichen.

Wie man eine Anlage auch plant, man bewegt sich stets in einem Spannungsfeld zwischen Kosten für Ketten, Kosten für Anbauteile der Ketten, benötigter Bauraum für Antriebs- und Umlenkstation, Kosten / Verfügbarkeit der Antriebsmotoren, Geschwindigkeitsschwankungen der Ketten, Pumpbewegung (insbesondere der Umlenkstation) und Gelenkverschleiß der Ketten.

Der Praktiker wünscht sich Kettentriebe mit - aus Kostengründen - möglichst großer Teilung, jedoch in Verbindung mit kleinen Umlenkradien und möglichst gleichmäßigen d.h. konstanten Kettengeschwindigkeiten bei insgesamt geringem Verschleiß.

Hier will die Erfindung ihren Beitrag leisten. Ziel ist es, ein oder mehrere der vorgenannten Ziele zu erfüllen.

Realisiert wird dies durch Verwendung eines oder mehrerer Zwischenantriebe gemäß der vorliegenden Anmeldung und/oder gemäß der WO2010/108816A1. Die Verwendung mehrerer Zwischenantriebe hat zudem den Vorteil dass die Zugkräfte in den Ketten entsprechend der Aufteilung der Antriebe aufgeteilt und demzufolge deutlich reduziert werden. Dies bedeutet, dass Antriebe und Ketten weniger Zugkräfte übertragen müssen. Die Folge ist, dass diese (und insbesondere die Ketten) leichter - und deutlich kostengünstiger - ausgeführt werden können. Dies führt zur Einsparung von Kosten und natürlich auch zur Reduktion bewegter Masse was wiederum Energie einspart.

Da die Ketten im gestreckten Zustand angetrieben werden, findet keine Relativbewegung in den Kettengelenken statt. Damit fehlt eine wesentliche Ursache für Gelenkverschleiß-Gelenke verschleißen also praktisch nicht.

Wenn die Antriebe kurz vor der (oder einer) Umlenkung liegen, hat es zur Folge das in der Umlenkung die Kettengelenke nur unter sehr geringer Last abknicken - mit sehr wenig Verschleiß.

Der im Folgenden beschriebene Aufbau der Ketten erweist sich dabei als besonders einfach, sehr kostengünstig und vorteilhaft. In Fig. 29 ist eine Buchsenförderkette dargestellt. Der Einfachheit halber ist hier in der Darstellung auf Anbauteile verzichtet. Anbauteile könnten z.B. sein: Bef.-Winkel, Achsen, Laufrollen, Tragplatten, Stahlzellen, Becherzellen usw..

Die Ketten bestehen aus einzelnen Gliedern, welche sukzessive in Gelenken GE schwenkbar miteinander gekoppelt sind. Der Abstand zwischen zwei Gelenken wird dabei als Teilung bezeichnet. Der präzisen Formulierung halber ist diese im Folgenden als Gelenkteilung bezeichnet. Gelenkketten werden dabei in der Regel geschlossen hergestellt und dann endlos umlaufend um mindestens zwei Kettenräder geführt.

Um trotz großer Gelenkteilung der Ketten insbesondere die geringe Bauhöhe der Anlagen zu realisieren in Verbindung mit Zwischenantrieben gemäß der vorliegenden Anmeldung und/oder gemäß der WO2010/108816A1 wird bei dieser Erfindung vorgeschlagen, die Teilung der mit den Antrieben in Wirkverbindung stehenden Teile zu verändern, insbesondere zu verkleinern. Insbesondere wird empfohlen, jedes Glied der Kette mit Zwischenbuchsen bzw. Zwischenbolzen ZB auszuführen. Ziel ist es also, mit den Antrieben nicht nur Kraft direkt auf die Kettengelenke zu übertragen, sondern auch dazwischen auf Zwischenbuchsen oder Zwischenbolzen. Jede Gelenkteilung wird also unterteilt in 2, 3, 4 - oder allgemein formuliert - in n Zwischenteilungen. Ob diese Bauteile als Zwischenbuchsen oder Zwischenbolzen ausgeführt sind ist unerheblich. Entscheidend ist nur, das diese Bauteile die identische (vorzugsweise rotationssymmetrische )Außenkontur haben, wie die Außenkontur der Gelenke. Ferner ist wichtig, dass sie eine ausreichende Gestaltfestigkeit aufweisen und damit die vom Antrieb eingeleiteten Kräfte sicher übertragen können ohne selbst Schaden zu nehmen. Vorzugsweise werden diese Bauteile aus Stahl und gehärtet ausgeführt.

Im Bereich des Antriebs

Da der Zwischenantrieb in Wirkverbindung steht mit den Kettengelenken und Zwischenbuchsen kann dieser mit wesentlich kleinerer Teilung ausgeführt werden. Dies hat einige sehr positive Dinge zur Folge wie z.B. deutlich kleinerer Teilkreisdurchmesser, deutlich geringere zu übertragende Drehmomente und deutlich weniger benötigter Bauraum. Oder anders ausgedrückt, bei gegebenem Bauraum können Antriebsräder mit höherer Zähnezahl eingesetzt werden. Dies wirkt sich positiv aus. Die Laufruhe der Antriebe wird verbessert, der Polygoneffekt wird reduziert und die Reaktionskräfte auf die Kette in radialer Richtung werden reduziert.

Im Bereich der Umlenkung(en)

Hier ist im Wesentlichen die Umlenkung am Ende der Anlage gemeint. Normalerweise, bei konventioneller Bauweise, wird an dieser Umlenkung zugleich die Kette angetrieben. Dies bedeutet, die Kette erfährt an dieser Stelle oder kurz davor ihre höchste Zugbelastung. Unter dieser hohen Zugbelastung knicken die Kettengelenke ab um den Teilungswinkel. Die Folge ist Verschleiß an Kettengelenken und Kettenrädern. Um diesen Verschleiß, den Polygoneffekt und auch Geräusche (Kettengelenke schlagen in den Zahnlücken auf) nicht zu sehr ansteigen zu lassen lässt der Praktiker die Zähnezahl (je nach Anlage) nicht unter eine bestimmte Anzahl abfallen. Daraus resultieren rel. große Durchmesser der Kettenräder, entsprechend hohe Antriebsdrehmomente usw. wie bereits beschrieben. Diese Situation an den Antriebsstationen verhindert also, Ketten mit wirklich großer Teilung und (auch aus Sicht der Anbauteile) kostengünstigem Aufbau einzusetzen.

Hier kommt die Erfindung sehr positiv und wirkungsvoll zum Einsatz. Der Zwischenantrieb wird vor der (oder einer) Umlenkung platziert. Antrieb und Umlenkung sind also getrennt. Der Antrieb findet statt an der gestreckten Kette, praktisch ohne Gelenkverschleiß. Umlenkung der Kette erfolgt anschließend an der Umlenkstation. Da die Kette hier (nahezu) frei ist von Zugkräften, erfolgt die Umlenkung der Kette ebenfalls praktisch ohne Gelenkverschleiß.

Die Umlenkung der Kette in praktisch lastfreiem Zustand hat jedoch weitere Vorteile. So kann, bedingt durch Lastfreiheit der Kette, die Zähnezahl der Umlenkräder extrem reduziert werden. Eine besonders bevorzugte Ausführung der Umlenkstation sieht vor, die an der Kette (oder deren Anbauteilen) im Bereich außerhalb der lichten Weite der Kette (also nicht zwischen den Laschen) angebrachten Laufrollen zur Führung der Kette zu nutzen. Diese Rollen sind vorzugsweise in der Nähe der Kettengelenke angeordnet und laufen im Bereich der Umlenkung über entsprechende Kulissen. Die Kette wird also nicht über Umlenk-Kettenräder, welche mit den Kettengelenken in Verbindung stehen, umgelenkt. Dies vereinfacht die Umlenkung und es lassen sich extrem kleine Umlenkradien realisieren. Die an den Ketten vorhandenen Rollen bekommen praktisch eine zusätzliche Funktion - die Führung der Ketten im Bereich der Umlenkung. Die Kulissen können ortsfest installiert sein oder federnd befestigt. Die federnde Befestigung dient zum Ausgleich der aus dem Kettenpolygon folgenden Längenänderung.

Jedoch auch diese aus dem Kettenpolygon resultierenden Längenänderung kann durch Gestaltung der Kulissen vermieden bzw. minimiert werden. Die Laufrollen (an den Ketten bzw. deren Anbauteilen) werden hierzu an den Kulissen der Umlenkung nicht über einen konstanten Radius geführt. Stattdessen ist dieser Radius über die komplette Kulisse nicht konstant. Die Kurve der Kulisse ist also derart gestaltet, das oszillierende Bewegung der Kulisse nicht mehr - oder nur in sehr geringem Maße - vorkommt. Für die Ketten, deren möglichst gleichmäßige Zugbelastung sowie generell die Vermeidung von Betriebsgeräuschen des Förderers / der Anlage wirkt sich dies sehr positiv aus.

Betriebsgeräusche

Bzgl. der Betriebsgeräusche sei darauf hingewiesen, dass bei Umlenkung der Kette durch Kettenräder immer auch eine Aufschlagkomponente existiert. Die Kettengelenke schlagen also im Wesentlichen radial auf die Kettenräder auf und verursachen Betriebsgeräusche, auch wenn man diese (etwas) dämpft. Bei Umlenkung der Kette mittels an der Kette (oder deren Anbauteilen) befestigten Rollen welche auf Kulissen ablaufen ist dies systembedingt ausgeschlossen.

Die Betriebsgeräusche an den Zwischenantrieben sind als sehr niedrig zu bezeichnen. Dies kommt im Wesentlichen dadurch, dass ein radiales Aufschlagen (Kettengelenke auf Antriebsrad) durch sinnvolle Gestaltung der Antriebsräder praktisch nicht vorkommt. Falls an den Ketten oder deren Anbauteilen keine Rollen vorhanden sind, ist es auch möglich, im Bereich der Umlenkung die Unter- und / oder Oberkante der Laschen durch mind. eine ortsfeste oder in geringem Maße bewegliche Rolleneinheit zu unterstützen und somit die Kette hierdurch zu führen und die Umlenkung zu organisieren.

Besonders vorteilhaft ist es, wenn die Zwischenantriebe reversierbar ausgeführt werden und in beide Kettentrume (normalerweise Ober- und Untertrum) eingreifen. Somit ist sichergestellt, dass in beiden Laufrichtungen die Gelenke der Ketten jeweils frei von Zugbelastung abknicken. Insbesondere an schräg verlaufenden Förderern, welche Fördergut über eine ansteigende Strecke hinauf oder hinab fördern, sind reversierbare Zwischenantriebe, welche in beide Kettentrume eingreifen, sehr vorteilhaft. Der "bergab" laufende Trum wird hierbei vom Zwischenantrieb praktisch abgebremst. Hierdurch wird verhindert dass die Kraftkomponente, die aus dem Hangabtrieb der bewegten Masse eine Zugkraft auf die Kette im Bereich der Umlenkung erzeugt, ein lastfreies Abknicken der Kettengelenke verhindert. Auch ist es möglich, auch an ansteigend verlaufenden Förderern durch Verwendung mehrerer reversierbarer Zwischenantriebe insgesamt die Zugkräfte in den Ketten zu senken. Die Masse des hinab laufenden Trums kann somit zum Antrieb des hinauf laufenden Trums genutzt werden. Bedingt durch diese Maßnahme kommt man häufig zu einer anderen Auslegung der Ketten - diese können teilweise deutlich leichter und somit kostengünstiger gebaut werden.

Ptattenband

Wie bereits erläutert, gibt es einen Zusammenhang zwischen Gelenkteilung der Ketten und ihren Kosten. Ketten mit größeren Gelenkteilungen verursachen also weniger Kosten. Zur Realisierung eines Plattenbandes werden jedoch auch Anbauteile wie z.B. Tragplatten oder / und Rollen benötigt. Hier gilt der gleiche Zusammenhang. Je größer die Gelenkteilung, desto weniger Anbauteile pro Meter werden benötigt, also desto geringer die Kosten pro Meter.

Besonders deutlich wird dieser Zusammenhang im Bereich der Automobilindustrie. Hier sind die Tragplatten häufig ausgelegt für hohe Lasten. Diese entstehen z.B. durch Radlasten der zu transportierenden Fahrzeuge. Hohe Lasten können aber auch durch andere zu transportierende Stück- oder Schüttgüter entstehen, auch in anderen Bereichen außerhalb der Automobilindustrie. Tragplatten sind häufig in Schweißkonstruktion ausgeführt und durch Anschweißen bestimmter Profile oder gekanteten Bleche ausgesteift. Dies ist mit erheblichem Aufwand und entsprechend hohen Kosten verbunden. Gelingt es nun, durch besondere Maßnahmen, die Teilung der Kette deutlich zu vergrößern, bedeutet dies einen wirtschaftlichen Vorteil durch sinkende Kosten. Pro Meter Plattenband werden weniger Tragplatten benötigt. Die Menge des eingesetzten Materials pro Tragplatte ist bei größerer Kettenteilung zwar höher, jedoch diverse Arbeitsgänge wie z.B. Schweißen, Richten sowie die Montage der Tragplatten auf die Ketten sind praktisch als fixe Größen zu betrachten. Da pro Meter Plattenband weniger Tragplatten benötigt werden, sinken also die Kosten deutlich.

Desweiteren ergeben sich auch Vorteile bei den Rollen. Diese sind ebenfalls häufig ausgelegt für hohe Lasten. Daraus resultieren gewisse Abmessungen und Anforderungen an die verwendeten Werkstoffe sowie ggf. deren Wärmebehandlung. Je nach Einsatzbereich kommt häufig noch die Forderung der Medienbeständigkeit. Dies wird i.d. Regel realisiert durch bestimmte Korrosionsschutz-Beschichtung, Verwendung von Wälzlagern aus rostfreiem Stahl, Sonderbefettung, Nachschmiermöglichkeit sowie Abdichtung der Wälzlager, häufig als Kombination aus metallischen Dichtungen mit Dichtungen aus speziellem Elastomer-Werkstoff. Die Konsequenz aus all diesen Forderungen und Maßnahmen ist ein hoher Preis der Rollen. Vergrößert man die Gelenkteilung der Ketten reduziert sich entsprechend die Stückzahl der benötigten Rollen - ein klarer wirtschaftlicher Vorteil.

Auch in vielen anderen Bereichen in denen Plattenbänder eingesetzt werden, insbesondere in der Schüttgüterindustrie lassen sich so erhebliche Einsparungen realisieren. Der Zusammenhang zwischen Gelenkteilung der Ketten und Preis der Kette sowie deren Anbauteilen ist letztlich immer derselbe.

Plattenbänder werden üblicherweise mit Rollen ausgeführt - dies ist jedoch nicht zwingend erforderlich. Diese Rollen werden benötigt zum Abtragen von Lasten auf der Förderstrecke (üblicherweise im Obertrum) und zum Abtragen der Ketten und deren Anbauteile (damit sind im Wesentlichen die Tragplatten gemeint) in der Rückführung (üblicherweise Untertrum). Weitere Funktionen haben diese Rollen üblicherweise nicht.

Die weiter oben geschilderten Probleme wie z.B. benötigter Bauraum für Antriebe und Umlenkungen, die großen Kettenrad-Abmessungen, die hohen Antriebs-Drehmomente, die Bauhöhe des Förderers, die auftretenden Geschwindigkeitsschwankungen der Ketten verhindern bisher jedoch den Einsatz von Ketten mit wirklich großer Teilung.

Hier will die vorliegende Erfindung ihren Beitrag leisten. Unter anderem durch Verwendung eines oder mehrerer Zwischenantriebe gemäß der vorliegenden Anmeldung und/oder gemäß der WO2010/1088116A1 wird es möglich, Ketten mit großer Teilung mit Erfolg in der Praxis einzusetzen. Doch es bedarf weiterer Maßnahmen.

Veränderungen der Kette

Die Kette sollte, wie bereits weiter oben beschrieben, verändert werden. Vorteilhaft ist, die Kette mit Zwischenbuchsen bzw. Zwischenbolzen auszustatten. Der prinzipielle Aufbau dieser Kette ist in Figur 29 dargestellt. Dies bewirkt, dass der Zwischenantrieb mit kleinerer Teilung und ggf. größerer Zähnezahl ausgeführt werden kann. Der Platzbedarf, insbesondere der Durchmesser der Antriebsräder, wird geringer. Desweiteren sinken Antriebsmomente. Die Geschwindigkeit der Ketten wird vergleichmäßigt - trotz extrem großer Gelenkteilung der Ketten und extrem kleinem Durchmesser der Antriebsräder. Die Ketten werden im gestreckten Zustand angetrieben. Hierdurch entfällt das sonst bei konventionellem Antrieb mittels Kettenrädern während des Antriebes anfallende Abknicken der Kettengelenke und somit eine wesentliche Ursache für Gelenkverschleiß der Ketten. Die Antriebe werden bevorzugt vor Umlenkung(en) der Kette installiert. So können in der jeweiligen Umlenkung die Kettengelenke (fast) frei von Zugkraft abknicken was vorteilhaft ist für Betrieb der Ketten mit geringem Gelenkverschleiß.

Sehr vorteilhaft ist, wenn die Antriebe in beide Trume (normalerweise Ober- und Untertrum) eingreifen. So ist es möglich, auch im Reversierbetrieb, insbesondere an der Umlenkung am Ende des Förderers / der Anlage, die Kettengelenke praktisch belastungsfrei abknicken zu lassen. Bei schräg verlaufenden Förderern ist zudem zu beachten, dass die Masse des abwärts laufenden Trums (und der daran befestigten Anbauteile) eine Hangabtriebskraft erzeugt, die auf die Kette übertragen wird. Diese Kraft verhindert - wenn der Antrieb nicht auf beide Trume einwirkt - ein belastungsfreies Abknicken der Kettengelenke.

Zusätzliche Funktion der Rollen

Wie bereits weiter oben beschrieben werden zum Bau eines Plattenbandes üblicherweise Rollen, die an den Ketten oder deren Anbauteilen befestigt sind, eingesetzt. Eine besonders bevorzugte Gestaltung des Plattenbandes gibt diesen Rollen weitere Funktionen. Durch geschicktes Nutzen dieser Rollen - auch zu anderen Zwecken als das Abtragen der zu transportierenden Lasten, der Ketten und ihrer Anbauteile - lassen sich Kosten sparen und positive Eigenschaften herbeiführen. So können die Ketten im Bereich der Antriebe von diesen Rollen geführt werden. Dies vereinfacht wiederum die Antriebe derart, dass sich die sonst an den Antrieben für die Führung der Zwischenkörper benötigten Rollen einsparen lassen. Dies macht die Antriebe schlanker und kostengünstiger.

Desweiteren können - auch besonders begünstigt durch praktisch lastfreies Abknicken der Ketten - an den Umlenkungen, insbesondere an den Enden des Plattenbandes / der Anlage diese Rollen auf entsprechenden Kulissen abrollen und so die Umlenkung der Ketten samt Anbauteilen herbeiführen. Diese Kulissen können ortsfest oder federnd beweglich angebracht sein. Sie sind deutlich kostengünstiger als Kettenräder. Kettenräder benötigen i.d.R. zusätzlich noch eine entsprechende Umlenkwelle incl. deren Lagerung. Die federnde Beweglichkeit wird benötigt, um die Längenänderungen aus dem Kettenpolygon an der Umlenkung (oszillierende Pumpbewegung) auffangen zu können. Dies hält die Zugkräfte in den Ketten einigermaßen konstant.

Eine besonders bevorzugte Ausführung der Kulissen sieht jedoch vor, die Rollen im Bereich der Umlenkung nicht auf einem konstanten Radius ablaufen zu lassen. Stattdessen ist dieser Radius in Abhängigkeit der jeweiligen Stellung der Rolle(n) derart verändert, das sich die oszillierende Pumpbewegung der Kulissen minimiert. Im Idealfall wird diese Bewegung zu Null. Dies ist besonders vorteilhaft, denn ggf. kann diese Kulisse ortsfest installiert werden. Desweiteren ist es äußerst positiv für die Vergleichmäßigung der Ketten-Zugkräfte sowie für einen geräuscharmen Betrieb des Förderers / der Anlage. Bzgl. der Betriebsgeräusche wird auf die obigen Ausführen verwiesen (s. Abschnitt "Betriebsgeräusche").

Fahrtreppe / Fahrsteig

Der Antrieb der Stufen einer Fahrtreppe oder eines Fahrsteiges wird üblicherweise realisiert mit ein oder mehreren Strängen von Stufenketten (meist ausgeführt als Buchsenförderketten), vorzugsweise 2 Stränge, also rechte und linke Kette. An diesen werden Achsen befestigt und an den Achsen werden die Stufen befestigt. Die Teilungen der eingesetzten Ketten variieren sehr stark. Man findet Ketten zwischen ca. 60 mm Teilung und ca. 200 mm. Letzteres bedeutet, dass pro Stufe dann zwei Kettenteilungen existieren, da die Stufenteilung üblicherweise ca. 400 mm beträgt. Die meisten Ketten haben eine Teilung von entweder ca. 100 mm (4 Teilungen pro Stufe) oder ca. 133 mm (3 Teilungen pro Stufe). Die Kettengelenke sind üblicherweise mit Rollen versehen, welche Ketten, Achsen, Stufen und Personen tragen sowie im Bereich der Umlenkbögen die aus dem Kettenzug resultierenden Stützkräfte auffangen / tragen. Es kommen also an einer Fahrtreppe oder einem Fahrsteig eine erhebliche Anzahl Rollen zum Einsatz. Da diese Rollen im Bereich der Umlenkbögen erhebliche Lasten zu tragen haben sind diese entsprechend zu dimensionieren und sind üblicherweise mit Wälzlagern ausgestattet. Die Konsequenz daraus ist - Rollen sind ein erheblicher Kostenblock bei einer Fahrtreppe / einem Fahrsteig.

Bedingt durch hohe Beladung (viele Menschen) der Fahrtreppe bauen sich über die Förderstrecke erhebliche Kettenzüge auf. Die Konsequenz ist, die Ketten und die Rollen sind für diese Lasten zu dimensionieren was diese sehr teuer macht. Desweiteren trifft man irgendwann auf eine technische Grenze, die eine weitere Steigerung der Förderhöhe nicht möglich macht. Große Förderhöhen werden also mehrstufig aufgebaut. Die Personen müssen dann zwischendurch auf die nächste Fahrtreppe umsteigen.

Hier setzt die Erfindung an, beseitigt die technische Grenze mit der Förderhöhe und senkt erheblich die Kosten für Rollen und Ketten.

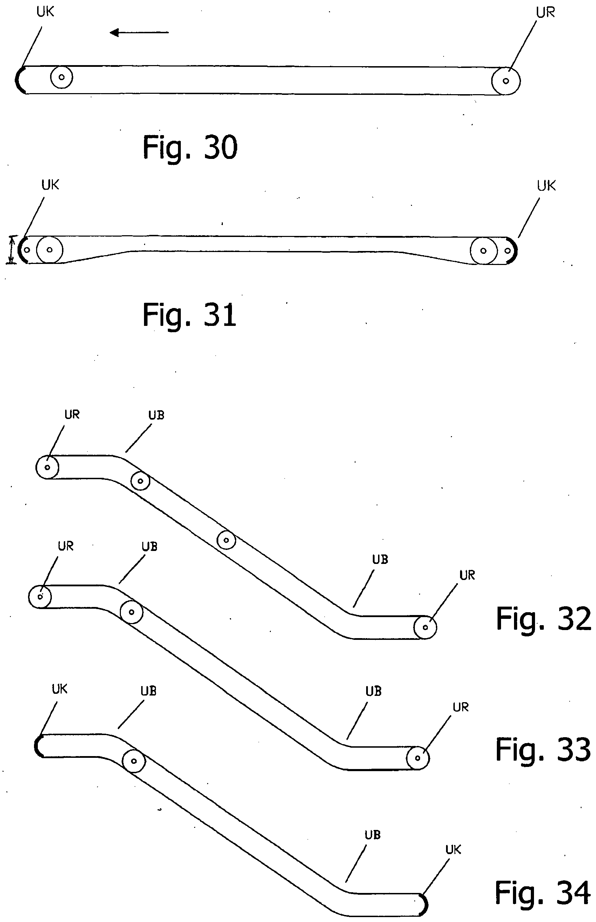

Die Figuren 32, 33 und 34 zeigen den prinzipiellen Aufbau einer Fahrtreppe. Hier sind jeweils einer oder mehrere Zwischenantriebe gemäß der vorliegenden Anmeldung und/oder gemäß der WO2010/108816A1 integriert. Diese Figuren zeigen prinzipiell einige Kombinationsmöglichkeiten wie z.B. Zwischenantrieb im Obertrum, Umlenkungen mit Kettenrädern UR, Zwischenantrieb eingreifend in Ober- und Untertrum, Umlenkungen mit Umlenkkulissen UK usw.... Selbstverständlich sind diese auch beliebig kombinierbar.

Figur 32 zeigt eine Fahrtreppe mit 2 Zwischenantrieben die in den Obertrum) der Kette eingreifen. Die Umlenkungen an der oberen und unteren Landestation sind mit Umlenk-Kettenrädern UR ausgestattet. Die Zwischenantriebe greifen in den Obertrum der Kette ein.

Figur 34 zeigt eine Fahrtreppe mit einem Zwischenantrieb, der in Ober- und Untertrum eingreift. Die Umlenkungen an den Landestationen sind mit Umlenkkulissen UK realisiert. Die an den Ketten oder an den Achsen oder Stufen befestigten Rollen laufen auf diesen ab.

Denkbar ist ebenfalls eine Kombination aus Figur 32 und Figur 34, bei der im Bereich des oberen Umlenkbogens ein Zwischenantrieb installiert ist, der in Ober- und Untertrum greift, und weiter unten ein zweiter Zwischenantrieb installiert ist, der nur in den Obertrum eingreift.

Ein im oberen Bereich installierter Zwischenantrieb, insbesondere wenn dieser in Ober-und Untertrum eingreift, bietet generell den Vorteil dass die Kette in dem darüber liegenden Bereich nur sehr geringe Zugkräfte zu übertragen hat. Wichtig ist, dass dieser Zwischenantrieb kurz unterhalb des oberen Umlenkbogens UB installiert ist. Die Folge ist geringer Gelenkverschleiß und insbesondere im Bereich der Umlenkbögen UB geringe Reaktionskräfte auf die Rollen. Infolge dessen sinken die Anforderungen an die Rollen gewaltig. Sie müssen nur für deutlich geringere Kräfte geeignet sein, was diese deutlich kostengünstiger macht.

Desweiteren erschließt sich durch einen besonderen Aufbau der Kette und Platzierung der Rollen ein weiteres erhebliches Optimierungspotential. Durch Erhöhung der Gelenkteilung reduzieren sich die Anzahl der Gelenke und die Anzahl der benötigten Rollen. Trotz der wesentlich erhöhten Gelenkteilung der Ketten sind niedrige Bauhöhen realisierbar.

Wie bereits weiter oben beschrieben lassen sich in Bereich oberen und unteren Umlenkung trotz der sehr großen Gelenkteilung sehr niedrige Bauhöhen realisieren. Insbesondere bei Verwendung von Umlenk-Kulissen mit nicht konstanten Umlenradien kommt noch hinzu, dass die oszillierende Bewegung der Umlenk-Kulissen nahezu Null wird bzw. komplett vermieden wird.

Bei Fahrtreppen und Fahrsteigen ist - bedingt durch Personentransport - eine möglichst gleichmäßige oder möglichst konstante Geschwindigkeit der Stufen bzw. der Ketten absolut wichtig. Dies wird bei dieser Erfindung erreicht durch ausreichende Zähnezahl und polygonkompensierende Wirkung des Zwischenantriebs verbunden mit Umlenk-Kulissen deren wirksamer Radius nicht konstant sondern als Funktion des Winkels veränderlich ist. Veränderlich derart, das (bei praktisch konstanter Zugkraft in den Ketten) die oszillierende Bewegung der Umlenk-Kulissen zu Null wird. Diese Maßnahmen in Summe gesehen, ermöglichen den Betrieb der Fahrtreppe / des Fahrsteiges mit gleichmäßiger Geschwindigkeit und geringen Betriebsgeräuschen.

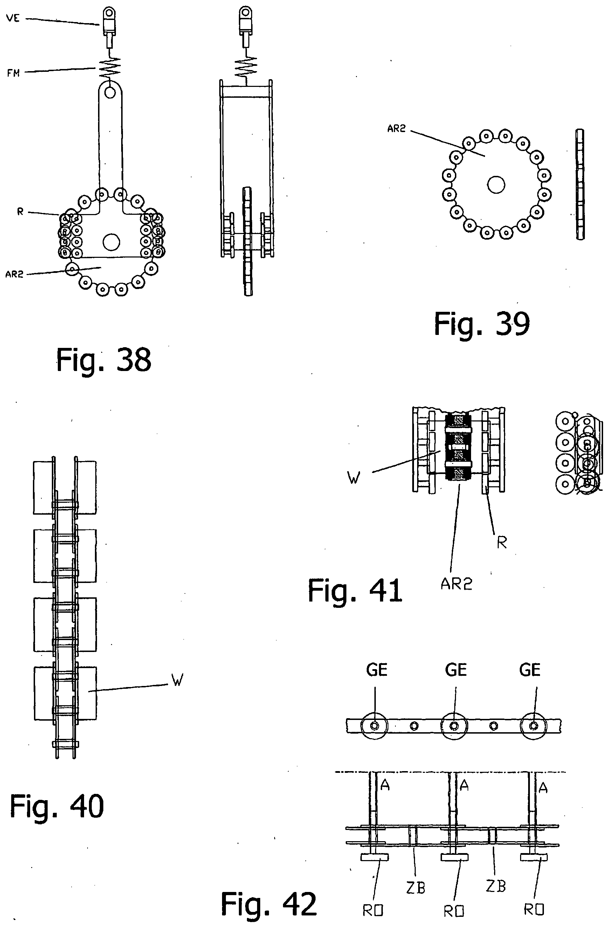

Der Aufbau der Kette ist aus Figur 42 zu erkennen. An den Gelenkbolzen sind auf der einen Seite (i.d.R. zur Doppelstrang-Mitte) die Achsen A (zur Befestigung der Stufen) befestigt. Auf der anderen Seite sind die Gelenkbolzen verlängert. Dort ist jeweils mindestens eine Rolle RO montiert. Diese tragen Achsen, Ketten, Stufen und Personen. Desweiteren übertragen sie Reaktionskräfte im Bereich der Antriebe und Umlenkungen.

Statt verlängerter Bolzen ist allerdings auch ein Aufbau der Kette mit durchgehenden Achsen denkbar. Die Kette könnte dann als Hohlbolzenkette ausgeführt werden und die Achsen würden durch die Bohrungen der Hohlbolzen geführt. Aber auch ein Aufbau als Doppelstrang-Förderketten ist denkbar bei der die Achsen zugleich die Funktion der Gelenkbolzen haben.

Weitere eigenständige Aspekte der Erfindung werden nunmehr mit Hilfe der Figuren 43 bis 46 näher erläutert. So betrifft die Erfindung gemäß einem weiteren eigenständigen Aspekt ein Antriebskettenrad für eine Gelenkkette, welches die folgenden Komponenten enthält:

    a) Einen Radkörper, der drehbeweglich um eine Rotationsachse lagerbar ist.

    b) Mindestens einen Zwischenkörper, welcher drehbeweglich um eine Drehachse am Radkörper gelagert ist, so dass er im Betriebszustand des Antriebskettenrades (zumindest in bestimmten Phasen der Bewegung) in Kraftübertragungsweg vom Radkörper zur Gelenkkette zu liegen kommt, wobei die Wirkflächen des Zwischenkörpers (die mit der Gelenkkette zusammenwirken) rotationssymmetrisch bezüglich der Drehachse sind.

Das genannte Antriebskettenrad kann im Übrigen vorteilhafterweise in einer der oben beschriebenen Weisen ausgestaltet sein. So kann der Radkörper insbesondere aus einer ersten und einer zweiten Seitenwand bestehen, die zwischen sich in einem Zwischenraum den Zwischenkörper aufnehmen. Der Zwischenkörper kann dabei insbesondere auf einer zwischen den Seitenwänden eingeklemmten Laufbuchse gelagert sein. Eine besonders einfache Ausführungsform ergibt sich, wenn der Zwischenkörper eine zylindrische Außenfläche hat, über welche er auf eine Gelenkkette einwirken kann.

Das beschriebene Antriebskettenrad hat den Vorteil, dass es bei einem besonders einfachen Aufbau eine starke Verschleißminderung erlaubt, da sich der mindestens eine Zwischenkörper bei Kontakt mit einer Gelenkkette mitdrehen kann und somit kein Reibungsverschleiß an der Kontaktfläche zwischen Gelenkkette und Zwischenkörper auftritt.

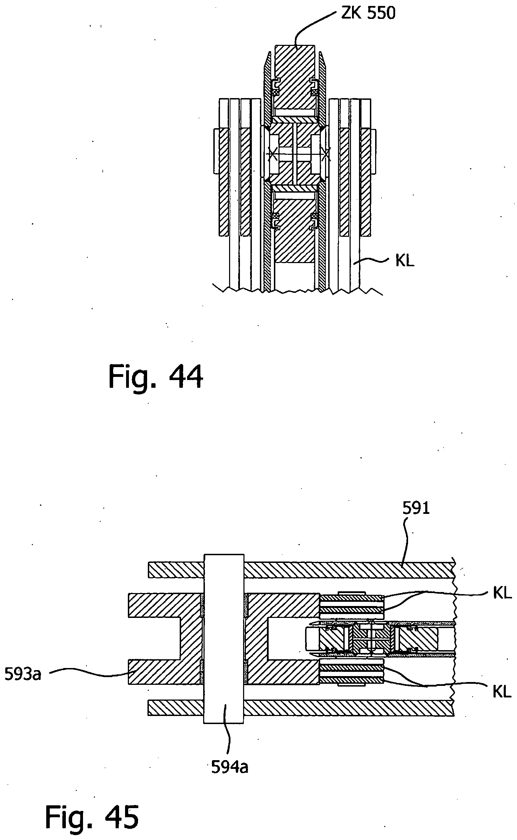

Figur 43 zeigt die Seitenansicht eines Antriebskettenrades 500 mit zylindrischen Zwischenkörpern und Führungselementen, welches insbesondere im Stahlwasserbau verwendet werden kann. Die Figuren 44 und 45 zeigen Schnitte entlang der Linien XLIV und XLV von Figur 43.

Das Antriebskettenrad 500 entspricht im Wesentlichen dem oben beschriebenen Antriebskettenrad 400, so dass nicht mehr im Einzelnen auf seinen Aufbau eingegangen werden muss. Im dargestellten Fall enthält es eine ungerade Anzahl von zylindrischen Zwischenkörpern 550, welche drehbeweglich um Achsen Y an den Zähnen eines Radkörpers mit den Seitenwänden 520 gelagert ist. Um das Kettenrad 500 herum ist in 180°-Umschlingung eine Gelenkkette G geführt, welche im dargestellten Beispiel senkrecht verläuft und beispielsweise das Wehrtor eines Wehres im Stahlwasserbau tragen kann. Es sind jedoch auch zahlreiche andere Anwendungen dieser Konstruktion möglich (z. B. als Förderer etc.).

Die Teilung der Gelenkkette G (d. h. der Abstand zwischen zwei Gelenken GE) soll etwas größer sein als die Teilung des Antriebskettenrades 500 (d. h. der Abstand zwischen einem Kontaktpunkt der Gelenkkette an einem ersten Zahn und der analogen Position am benachbarten Zahn). Das Abknicken der Kettenglieder kann dann möglichst lastfrei und damit verschleißarm erfolgen.

Um ein möglichst gerades Einlaufen der Gelenkkette G in das Antriebskettenrad 500 zu ermöglichen, sind Führungselemente 593a und 593b vorgesehen. Diese werden im dargestellten Beispiel durch drehbeweglich um Achsen 594a bzw. 594b gelagerte Rollen realisiert, welche in Kontakt zu den Kettenlaschen KL stehen (vgl. Figur 45) und auf diese einen radial einwärts in Richtung der Rotationsachse D des Antriebskettenrades 500 gerichteten Druck ausüben. Durch diesen Druck wird verhindert, dass die Kettengelenke GE unter Einfluss der auf sie wirkenden Kräfte aus dem Zahngrund des Antriebskettenrades 500 austreten, was eine Knickbewegung unter Belastung verursachen würde.

Die beiden Führungselemente oder Führungsrollen 593a, 593b sind gegenüberliegend am einlaufenden bzw. am auslaufenden Trum der Gelenkkette G vorgesehen. Der Winkel, den die Achsen 594a, 594b der Führungsrollen 593a, 593b mit der Rotationsachse D des Antriebskettenrades einschließen, liegt typischerweise in einem Bereich von 180° ± 80°. Durch die konstruktive Festlegung dieses Winkels kann der je nach Anwendung gewünschte Kompromiss zwischen verbleibendem Kettenverschleiß und den an den Führungsrollen auftretenden Kräfte eingestellt werden.

Die Führungsrollen 593a, 593b sind über ein Joch 591 miteinander gekoppelt, wobei dieses Joch in einem Gelenk 590 drehbeweglich an einer ortsfesten Halterung H gelagert ist. Die Kopplung gegenüberliegender Führungselemente hat den Vorteil, dass auf diese Elemente wirkende Kräfte sich zumindest teilweise kompensieren. Die Halterung der Führungselemente wird damit von diesen Kräften, welche zum Teil sehr erhebliche Größenordnungen annehmen können, entlastet.

Des Weiteren ist vorteilhaft, wenn das Antriebskettenrad eine ungerade Zähnezahl hat, da dann bei symmetrischer Ausgestaltung der Führungselemente erreicht wird, dass diese phasenversetzt die Minima und Maxima ihres Abstandes zur Rotationsachse D durchlaufen.

Durch das kräftefreie Abknicken der Gelenkkette G ist es möglich, eine besonders einfache und kostengünstige Gelenkkette zu verwenden, beispielsweise eine herkömmliche Gallkette.

Figur 46 zeigt eine Ausführungsform eines Antriebskettenrades 600, bei welchem pro Zahn 621 zwei bewegliche Zwischenkörper 650a (= ZK1) und 650b (= ZK2) vorgesehen sind, die gemeinsam jeweils auf ein und dasselbe Kettenglied KG einer Gelenkkette G einwirken. Das Antriebskettenrad 600 kann ansonsten in einer der oben beschriebenen Weisen ausgestaltet sein, also insbesondere aus zwei beabstandeten Zwischenwänden 620 (hier identischer Bauart) bestehen, die zwischen sich Laufbuchsen einklemmen, auf denen wiederum die Zwischenkörper 650a und 650b um Drehachsen Y1 bzw. Y2 drehbar gelagert sind.

Im dargestellten Beispiel ist der radial weiter außen liegende Zwischenkörper 650a drehbar um eine Achse Y1 gelagert. Er weist einen Schlitz 654 auf, in den ein Bolzen 626 des Antriebskettenrades eingreift, um die Beweglichkeit des Zwischenkörpers zu begrenzen. Ferner ist eine Feder 666 zwischen Radkörper und Zwischenkörper angebracht, die den Zwischenkörper in eine bestimmte Ruheposition zieht, wenn er nicht in Wechselwirkung mit einer Gelenkkette G steht.

Der radial weiter innen drehbar um eine Achse Y2 gelagerte Zwischenkörper 650b wird im Wesentlichen durch einen Zylinder realisiert. Seine Wirkflächen sind daher rotationssymmetrisch zur Achse Y2.

Wenn die beiden Zwischenkörper 650a, 650b in ein einlaufendes Kettenglied KG eingreifen, kommen sie mit dessen Gelenk GE (d. h. dem dortigen Bolzen bzw. der Buchse) in Kontakt. Vorteilhafterweise liegt dabei die Verbindungslinie von der Drehachse Y1 des äußeren Zwischenkörpers 650a zu seinem Kontaktpunkt zum Gelenk GE unter einem nur kleinen Winkel zur Längserstreckung der Gelenkkette G. Dieser Winkel ist typischerweise kleiner als 5°. Sein Vorzeichen ist in der Regel beim ersten Kontakt zwischen Zwischenkörper 650a und Gelenk GE so, dass der äußere Zwischenkörper 650a einen (geringen) radial nach außen gerichteten Druck auf das Gelenk GE ausübt. Nach einer entsprechenden Drehung des Antriebskettenrades 600 wird der Winkel Null und ändert anschließend sein Vorzeichen derart, dass der äußere Zwischenkörper 650a einen radial nach innen gerichteten Druck auf das Gelenk GE ausübt. Über diesen Druck wird das Gelenk GE dann gegen den inneren Zwischenkörper 650b gepresst.

Bei der weiteren Drehung des Antriebskettenrades 600 wird durch das Zusammenwirken der beiden Zwischenkörper 650a und 650b das Kettenglied im Wesentlichen auf einer geraden Bahn weitergeführt, bis der nächste Zahn mit den nächsten beiden Zwischenkörpern in das nächste Kettenglied eingreift und die Kraftübertragung übernimmt. Durch diese Übernahme wird das bisherige Paar Kettengelenk/Zwischenkörper entlastet, so dass das zugehörige Kettenglied lastfrei abknicken kann.

Bei der dann folgenden Abknickbewegung wandert das Kettengelenk immer weiter entlang des inneren Zwischenkörpers 650b radial nach innen, wobei es den Kontakt zum äußeren Zwischenkörper 650a verliert. Nach einer ausreichenden Umschlingung des Antriebskettenrades, im dargestellten Beispiel bei ca. 180°, hat das Gelenk GE dann einen Abstand zu den Zwischenkörpern erreicht, bei dem es frei aus dem Antriebskettenrad austreten kann. Dieser freie Austritt wird durch die Konstruktion und Lage des inneren Zwischenkörpers 650b erreicht sowie durch die Tatsache, dass die Teilung der Gelenkkette G etwas größer gewählt ist als die Teilung des Antriebskettenrades 600.

Damit bei einer gekröpften Kette G das Abknicken der Kettenglieder auch wirklich lastfrei erfolgt, sollte die Gelenkkette in einer bestimmten Richtung in das Antriebskettenrad 600 einlaufen. Diese Richtung ergibt sich daraus, dass das Kettenglied mit der aktuell unter (hoher) Krafteinwirkung durch die Zwischenkörper stehenden Buchse nicht abknicken soll (in Figur 46 hätten die Kettenglieder KG des einlaufenden Obertrums somit links ihre Buchse und rechts ihren Bolzen).

Besonders vorteilhaft ist, dass bei einer Gallkette derartige Nebenbedingungen nicht bestehen, da bei Krafteinwirkung auf den Bolzen einer Gallkette automatisch nur die zurückliegenden Kettenlaschen unter Last liegen, nicht jedoch die vorausliegenden. Letztere sind daher lastfrei, wenn sie abknicken.

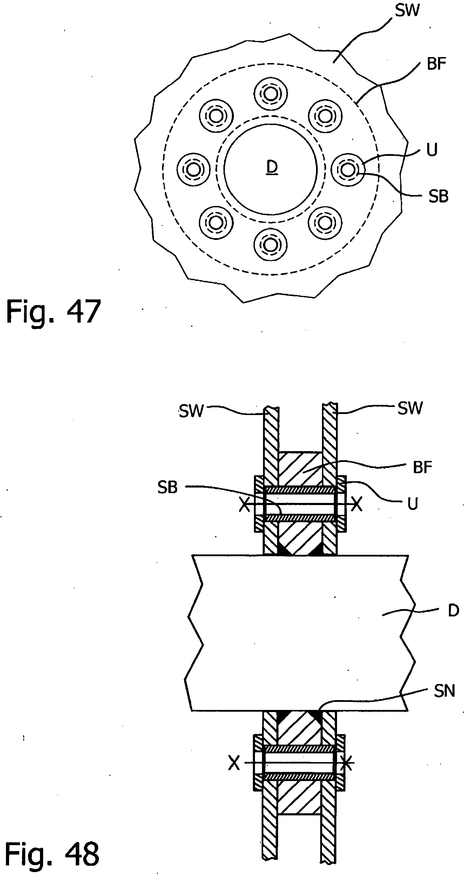

In den Figuren 47 und 48 ist weiterhin eine vorteilhafte Befestigung von zwei Seitenwänden SW des Radkörpers an der Rotationsachse D eines Antriebskettenrades gemäß der vorliegenden Anmeldung illustriert. Dabei ist an der Rotationsachse D ein kreisringförmiger Befestigungsflansch BF angebracht, z. B. über Schweißnähte SN. An diesen Befestigungsflansch BF werden beidseitig die Seitenwände SW angelegt und durch mehrere (hier acht) umfänglich verteilt angeordnete Schrauben und Muttern (nicht dargestellt) angeschraubt. Die Schrauben (nicht dargestellt) verlaufen entlang der Linien X-X. Ihre Köpfe sowie die zugehörigen Muttern liegen jeweils über U-Scheiben U auf den Seitenwänden SW auf.

Durch die Anlage der Seitenwände SW an dem Befestigungsflansch BF erhält man einen doppelten Reibschluss. Zusätzlich können Scherbuchsen SB eingepresst werden, die den Befestigungsflansch BF und die Seitenwände SW durchgreifen. Die Scherbuchsen SB können vollständig geschlossen oder geschlitzt ausgeführt sein und wirken wie ein Spannstift. Durch die Bohrung der Scherbuchsen führen die o. g. Schrauben zum Erzeugen der Spannkraft für den Reibschluss zwischen Befestigungsflansch BF und Seitenwänden SW. Mit einem derartigen Aufbau lässt sich durch Kombination von Reibschluss und Formschluss sowie durch die "zweischnittige" Übertragung ein Mehrfaches an Drehmoment übertragen.

**Patentansprüche**

1. Gelenkkettenantrieb mit einer Gelenkkette (G) und einem Antriebskettenrad (AR, AR1, AR2, 100-600) für die Gelenkkette (G), das Antriebskettenrad enthaltend:

   a) eine erste Seitenwand (SW, SW1, 120-620), die drehbar um eine Achse (D) lagerbar ist;
   b) eine zweite Seitenwand (SW, SW2, 130-630), die unter Ausbildung eines Zwischenraumes (ZR) axial beabstandet von der ersten Seitenwand angeordnet und mit dieser gekoppelt ist;
   c) einen Zwischenkörper (ZK, ZK1, 150-650), welcher im genannten Zwischenraum (ZR) angeordnet ist;
   d) eine Laufbuchse (LB, 110-410), welche zwischen der ersten Seitenwand und der zweiten Seitenwand eingeklemmt ist und an welcher der Zwischenkörper beweglich gelagert ist,

   **dadurch gekennzeichnet, dass**

   e) der Zwischenkörper (ZK, ZK1, 150-650) drehbeweglich auf der Laufbuchse (LB, 110-410) gelagert ist,
   f) die erste Seitenwand und die zweite Seitenwand des Antriebskettenrades einen Zahn (121, 131, 221, 231, 321, 331) aufweist, welcher beim Betrieb des Gelenkkettenantriebes in die Gelenkkette (G) eingreift, wobei der Zwischenkörper (ZK, ZK1, 150-650) an diesem Zahn gelagert ist.

2. Gelenkkettenantrieb nach einem der vorhergehenden Ansprüche, enthaltend:

   a) eine erste Seitenwand (SW1, 120-320), die drehbar um eine Achse (D) lagerbar ist;
   b) eine zweite Seitenwand (SW2, 130-330), die unter Ausbildung eines Zwischenraumes (ZR) axial beabstandet von der ersten Seitenwand angeordnet und mit dieser gekoppelt ist;
   c) einen Zwischenkörper (ZK, 150-350), welcher im genannten Zwischenraum (ZR) beweglich an der ersten und/oder der zweiten Seitenwand gelagert ist;

   d) ein Kulissenelement (KE, KE1, KE2, 180-380), welches an einer ortsfesten Halterung (H) so anbringbar oder angebracht ist, dass es in den Zwischenraum (ZR) ragt und mit dem Zwischenkörper in Kontakt kommen kann.

3. Gelenkkettenantrieb nach einem der vorhergehenden Ansprüche, enthaltend:

   a) einen Radkörper (620), der drehbeweglich um eine Rotationsachse (D) lagerbar ist;
   b) mindestens zwei Zwischenkörper (ZK1, ZK2, 650a, 650b), welche beweglich am Radkörper derart gelagert sind, dass sie während einer Umdrehung des Radkörpers beide Kraft auf dasselbe Kettenglied (KG) ausüben können.

4. Gelenkkettenantrieb nach Anspruch 2 oder 3, **dadurch gekennzeichnet, dass** das Kulissenelement (KE, KE1, KE2, 180-380) beweglich auf der ortsfesten Halterung (H) lagerbar oder gelagert ist, vorzugsweise drehbeweglich.

5. Gelenkkettenantrieb nach einem der vorhergehenden Ansprüche, **dadurch gekennzeichnet, dass** die erste Seitenwand (120-420) und die zweite Seitenwand durch eine Schraube verbunden sind, welche die Laufbuchse (LB, 110-410) durchgreift.

6. Gelenkkettenantrieb nach einem der vorhergehenden Ansprüche, **dadurch gekennzeichnet, dass** die Laufbuchse (LB, 110-410) zylindrisch mit exzentrischer Bohrung ist.

7. Gelenkkettenantrieb nach einem der vorhergehenden Ansprüche, **dadurch gekennzeichnet, dass** an der ersten Seitenwand (SW, SW1, 120-420) und/oder der zweiten Seitenwand (SW, SW2, 130-430) ein Trägerzapfen (141-441, 142-442) befestigt ist, welcher in die Laufbuchse (LB, 110-410) hineinragt.

8. Gelenkkettenantrieb nach einem der vorhergehenden Ansprüche, **dadurch gekennzeichnet, dass** die Laufbuchse (LB, 110-410) und/oder der Trägerzapfen (141-441, 1412-442) eine Öffnung (112, 144) zur Durchleitung eines Schmiermittels aufweist, und dass zwischen dem Zwischenkörper (ZK, ZK1, ZK2, 150-650) und der Laufbuchse (LB, 110-410) ein Wälzlager (160-460) angeordnet und eine Labyrinthdichtung vorgesehen ist.

9. Gelenkkettenantrieb nach Anspruch 3, **dadurch gekennzeichnet, dass** mindestens einer der Zwischenkörper (ZK1, ZK2, 650a, 650b) drehbeweglich am Radkörper (620) gelagert ist, wobei seine Wirkflächen rotationssymmetrisch zu dieser Drehachse sind und wobei diese Drehachse (Y2) einen kleineren Abstand zur Rotationsachse (D) des Radkörpers (620) hat als die Gelenke (GE) einer umlaufenden Gelenkkette.

10. Plattenband, Rollenband, Zellenband, Fahrtreppe bzw. Fahrsteig, Kettenbecherwerk, oder dergleichen, enthaltend mindestens einen Gelenkkettenantrieb nach einem der vorhergehenden Ansprüche, insbesondere als Zwischenantrieb.

**Claims**

1. Sprocket-chain drive with a sprocket chain (G) and a drive sprocket (AR, AR1, AR2, 100-600) for the sprocket chain (G), the drive sprocket containing:

   a) a first side wall (SW, SW1, 120-620), that can be mounted rotatably around an axis (D);
   b) a second side wall (SW, SW2, 130-630), that is axially spaced from and coupled with the first side wall by forming a space (ZR);
   c) an intermediate body (ZK, ZK1, 150-650), that is positioned in the mentioned space (ZR);
   d) a liner (LB, 110-410), that is clamped between the first side wall and the second side wall and at which the intermediate body is movably mounted,

   **characterized in that**

   e) the intermediate body (ZK, ZK1, 150-650) is mounted rotatably on the liner (LB, 110-410),
   f) the first side wall and the second side wall of the drive sprocket have a sprocket (121, 131, 221, 231, 321, 331), that engages into the sprocket chain (G) during operation of the sprocket-chain drive, wherein the intermediate body (ZK, ZK1, 150-650) is mounted at this sprocket.

2. Sprocket-chain drive according to one of the preceding claims, containing:

   a) a first side wall (SW1, 120-320), that can be rotatably mounted around an axis (D);
   b) a second side wall (SW2, 130-330), that is axially spaced from and linked with the first side wall by forming a space (ZR);
   c) an intermediate body (ZK, 150-350), that is movably mounted in the mentioned space (ZR) on the first and/or the second side wall;
   d) a guide element (KE, KE1, KE2, 180-380), which can be or is mounted at a stationary mounting (H) such that it protrudes into the space (ZR) and can come into contact with the intermediate body.

3. Sprocket-chain drive according to one of the preceding claims, containing:

   a) a wheel body (620), that can be rotatably mounted around a rotation axis (D);
   b) at least two intermediate bodies (ZK1, ZK2, 650a, 650b), that are movably mounted at the wheel body such that they both can exert force on the same chain link (KG) during a rotation of the wheel body.

4. Sprocket-chain drive according to claim 2 or 3, **characterized in that** the guide element (KE, KE1, KE2, 180-380) can be or is movably mounted on the stationary mounting (H), preferably rotatably.

5. Sprocket-chain drive according to one of the preceding claims, **characterized in that** the first side wall (120-420) and the second side wall are linked by a screw that reaches through the liner (LB, 110-410).

6. Sprocket-chain drive according to one of the preceding claims, **characterized in that** the liner (LB, 110-410) is cylindrical with eccentrical bore.

7. Sprocket-chain drive according to one of the preceding claims, **characterized in that** a support pin (141-441, 142-442) is mounted at the first side wall (SW, SW1, 120-420) and/or the second side wall (SW, SW2, 130-430), which protrudes into the liner (LB, 110-410).

8. Sprocket-chain drive according to one of the preceding claims, **characterized in that** the liner (LB, 110-410) and/or the support pin (141-441, 142-442) has an opening (112, 144) for the transmission of a lubricant, and that a rolling bearing (160-460) is positioned and a labyrinth seal is provided between the intermediate body (ZK, ZK1, ZK2, 150-650) and the liner (LB, 110-410).

9. Sprocket-chain drive according to claim 3, **characterized in that** at least one of the intermediate bodies (ZK1, ZK2, 650a, 650b) is rotatably mounted at the wheel body (620), wherein its active surfaces are rotationally symmetric to this turning axis and wherein this turning axis (Y2) has a smaller distance to the rotation axis (D) of the wheel body (620) than the links (GE) of a circulating sprocket chain.

10. Slat conveyor, roller conveyor, cell conveyor, escalator respectively moving walk, chain bucket conveyor, or like that, containing at least one sprocket-chain drive according to one of the preceding claims, particularly as an intermediate drive.

**Revendications**

1. Entraînement de chaîne articulée avec une chaîne articulée (G) et une roue dentée d'entraînement (AR, AR1, AR2, 100-600) pour la chaîne articulée (G), la roue dentée d'entraînement contenant:

   a) une première paroi latérale (SW, SW1, 120-620), qui peut être montée de manière rotative autour d'un axe (D);
   b) une deuxième paroi latérale (SW, SW2, 130-630), qui est espacée axialement de la première paroi latérale en formant une espace (ZR) et qui est accouplée avec celle-ci;
   c) un corps intermédiaire (ZK, ZK1, 150-650), qui est positionné dans l'espace (ZR) mentionnée;
   d) une douille (LB, 110-410), qui est serrée entre la première paroi latérale et la deuxième paroi latérale et à laquelle le corps intermédiaire est monté de manière mobile,

   **caractérisé en ce que**

   e) le corps intermédiaire (ZK, ZK1, 150-650) est monté à rotation sur la douille (LB, 110-410),
   f) la première paroi latérale et la deuxième paroi latérale de la roue dentée d'entraînement ont une dent (121, 131, 221, 231, 321, 331), qui engage dans la chaîne articulée (G) lors de l'opération de l'entraînement de chaîne articulée, et selon lequel le corps intermédiaire (ZK, ZK1, 150-650) est monté à cette dent.

2. Entraînement de chaîne articulée selon une des revendications précédentes, contenant:

   a) une première paroi latérale (SW1, 120-320), qui peut être montée de manière rotative autour d'un axe (D);
   b) une deuxième paroi latérale (SW2, 130-330), qui est espacée axialement de la première paroi latérale en formant une espace (ZR) et qui est accouplée avec celle-ci;
   c) un corps intermédiaire (ZK, 150-350), qui est monté de manière mobile dans l'espace mentionnée (ZR) à la première et/ou la deuxième paroi latérale;
   d) un élément de coulisse (KE, KE1, KE2, 180-380), qui peut être ou est monté à un support fixe (H) de sorte qu'il s'étend dans l'espace (ZR) et peut venir en contact avec le corps intermédiaire.

3. Entraînement de chaîne articulée selon une des revendications précédentes, contenant:

   a) un corps de roue (620), qui peut être monté à rotation autour d'un axe de rotation (D);
   b) au moins deux corps intermédiaires (ZK1, ZK2, 650a, 650b), qui sont montés de manière mobile au corps de roue de sorte que les deux puissent exercer de force sur le même maillon de chaîne (KG) pendant une rotation du corps de roue.

4. Entraînement de chaîne articulée selon la revendication 2 ou 3, **caractérisé en ce que** l'élément de coulisse (KE, KE1, KE2, 180-380) peut être ou est monté de manière mobile sur le support fixe (H), de préférence de manière rotative.

5. Entraînement de chaîne articulée selon une des revendications précédentes,
   **caractérisé en ce que** la première paroi latérale (120-420) et la deuxième paroi latérale sont reliées par une vis qui traverse la douille (LB, 110-410).

6. Entraînement de chaîne articulée selon une des revendications précédentes,
   **caractérisé en ce que** la douille (LB, 110-410) est cylindrique avec un perçage excentrique.

7. Entraînement de chaîne articulée selon une des revendications précédentes,
   **caractérisé en ce qu'**une cheville de soutien (141-441, 142-442), qui s'étend dans la douille (LB, 110-410), est montée à la première paroi latérale (SW, SW1, 120-420) et/ou la deuxième paroi latérale (SW, SW2, 130-430).

8. Entraînement de chaîne articulée selon une des revendications précédentes,
   **caractérisé en ce que** la douille (LB, 110-410) et/ou la cheville de soutien (141-441, 142-442) a une ouverture (112, 144) pour le passage d'un lubrifiant, et **en ce qu'**un roulement (160-460) est positionné et un joint-labyrinthe est prévu entre le corps intermédiaire (ZK, ZK1, ZK2, 150-650) et la douille (LB, 110-410).

9. Entraînement de chaîne articulée selon la revendication 3,
   **caractérisé en ce qu'**au moins un des corps intermédiaires (ZK1, ZK2, 650a, 650b) est monté à rotation au corps de roue (620),
   selon lequel ses surfaces actives sont symétriques en rotation par rapport à cet axe et selon lequel cet axe (Y2) a une distance inférieure à l'axe de rotation (D) du corps de roue (620) que les articulations (GE) d'une chaîne articulée circulante.

10. Convoyeur à plaques, convoyeur à rouleaux, convoyeur à cellules, escalier ou trottoir roulant, chaîne d'élévateurs à godets, ou similaire, contenant au moins un entraînement de chaîne articulée selon une des revendications précédentes, particulièrement comme entraînement intermédiaire.

**Fig. 1**

**Fig. 2**

**Fig. 3**

Fig. 4

Fig. 5

Fig. 6

**Fig. 7**

**Fig. 8**

**Fig. 9**

ZK 250

211

242

241

SW2 230

y

x  z

SW1 220

KE 280

ZR

Fig. 10

ZK 250

XII

254

253

251

XII

Fig. 11

ZK 250

253

Fig. 12

Fig. 13

Fig. 14

Fig. 15

Fig. 16

Fig. 17

Fig. 18

Fig. 19

Fig. 20

ZK 450

460

415

LB 410

y

x    z

442

441

411

SW 430

SW 420

ZR

## Fig. 21

ZK 450

ZK 450

453

455

456

453

## Fig. 22

## Fig. 23

**Fig. 24**

Schnitt A - A

Schnitt B - B

Schnitt C - C

**Fig. 25**

Fig. 26

Fig. 27

**Fig. 28**

**Fig. 29**

UK

UR

Fig. 30

UK

UK

Fig. 31

UR UB

UR UB

UB

UR

Fig. 32

UR UB

UB

UR

Fig. 33

UK UB

UB

UK

Fig. 34

UR

UR

UK

UR

## Fig. 35

UK

## Fig. 36

UR

VE

FM

AR2

AR1

## Fig. 37

UR

VE

FM

R

AR2

**Fig. 38**

AR2

**Fig. 39**

W

**Fig. 40**

W

R

AR2

**Fig. 41**

GE GE GE

A A A

ZB ZB

RO RO RO

**Fig. 42**

Fig. 43

ZK 550

KL

## Fig. 44

591

KL

593a

KL

594a

## Fig. 45

Fig. 46

Fig. 47

Fig. 48

**IN DER BESCHREIBUNG AUFGEFÜHRTE DOKUMENTE**

**In der Beschreibung aufgeführte Patentdokumente**

- WO 2010108816 A1
- DE 202009017290 U1
- EP 611000 A1
- WO 20101088116 A1